# EUROPEAN PATENT SPECIFICATION

(11) **EP 2 647 170 B1**
(45) Date of publication and mention of the grant of the patent: **07.10.2020**
(21) Application number: 11781809.6
(22) Date of filing: 14.11.2011
(51) Int. Cl.: H04L 29/06, H04L 29/08

(54) **DYNAMIC ASSIGNMENT OF A SERVING NETWORK NODE**
DYNAMISCHE ZUWEISUNG EINES SERVERNETZWERKKNOTENS
ATTRIBUTION DYNAMIQUE D'UN NOEUD DE SERVICE DU RÉSEAU

(30) Priority: 30.11.2010 EP 10193057; 24.06.2011 EP 11171297
(43) Date of publication of application: 09.10.2013
(73) Proprietor: Koninklijke KPN N.V., 3072 AP Rotterdam (NL)
(72) Inventor: VEENSTRA, Pieter, NL-2518 HR The Hague (NL); PONS, Colin, NL-3059 VC Rotterdam (NL)
(74) Representative: Wuyts, Koenraad Maria
(86) International application number: PCT/EP2011/070010
(87) International publication number: WO 2012/072407

(56) References cited:
- EP-A1- 1 973 295
- EP-A1- 1 973 295
- US-A1- 2003 110 257
- US-A1- 2009 271 798
- US-A1- 2010 208 648

## Description

### Field of the invention

The invention generally relates to dynamic assignment of a serving network node in a communication network and, in particular, though not necessarily, to a method and a system for dynamically assignment of a serving network node in a communications network, to a network node configured for dynamic assignment of a serving network node in a communications network, a subscriber database server and a location server for use with such network node and a computer program product using such method.

### Background of the invention

Due to random nature of signaling traffic and/or software and hardware failures associated with nodes in a communications network, it is inevitable to have network anomalies that can potentially result in an overload situation or even a partial collapse of a communications network. In an IP-based Next Generation Network (NGN) such as a communications network based on the 3GPP IMS architecture, a serving network node function such as the S-CSCF handles all major tasks in the control layer, including registration and routing of signaling, session control and service routing with Application Server (AS) assistance. Hence, overload or other types of failures of such serving network node (e.g. an S-CSCF) may thus cause severe performance degradation, activate packet re-transmission, an unrecoverable server collapse or even a partial collapse of the network. This sensitivity to failure of essential elements in a network may also be exploited by attackers through malicious attacks associated with multiple SIP session set-up and tear-down signaling in order to disrupt the IMS network.

Proposals have been put forward for preventing such failures. For example, for overload situations in particular, the overload of the S-CSCF in TR 23.812 v 1.1.2 proposed scheme which relies on the registration process. In this scheme, the conventional 3GPP IMS architecture provides a form of load balancing wherein at registration the I-CSCF may select a best-fit S-CSCF for the UE. After registration however, the P-CSCF, S-CSCF and a signaling path are rigidly coupled to a UE for an entire registration period which may be up to typically 24 hours or more. Any failure of the S-CSCF during the registration period may cause severe network problems.

A further registration-based overload prevention scheme is described by Liang Xu et. al. in their article "De-registration based S-CSCF load balancing in IMS core network" IEEE International Conference 14-18 June 2009 ICC'09 Dresden. The authors propose a load balancing scheme based on forced de-registration when overload conditions are detected at a S-CSCF and re-registering with another less loaded S-CSCF.

Such overload prevention schemes however have the disadvantage that the IMS registration process in the current 3GPP IMS architecture is a relatively signaling intensive process. Multiple de-registrations may cause an avalanche of re-registrations that in turn may cause undesired performance degradation of the IMS core. Further, as the registration procedure is rather complex, it is relatively slow and may occur infrequent so that it provides a mechanism which is less suitable for generating a fast and effective response to an emerging overload situation.

Additionally, these proposed load balance schemes cannot deal with services, e.g. business trunking services, which do not rely or which rely only partly on the conventional IMS registration procedure. For example, in an IP-based enterprise network - usually referred to as a Next Generation Corporate Network (NGCN) - one or more IP private branch exchanges (IP-PBX) may manage the connections among the enterprise communications devices (e.g. wireline phone, wireless phone, soft client) and the interoperability to the circuit- or packet switched network. The NGCN may be connected to the PSTN or an IP-based network through a trunk, which represents a single logical connection between the two networks.

In such a constellation typically many users may be served via a single trunk whereby the number of active end-users may vary significantly over time and across such trunk lines. Due to recent trends such as increased home working and the availability of flexible office hours, the load of a trunk line is very unpredictable and sensible to high variations which may cause congestion problems when using a conventional IMS network.

If a NGCN for example relies on a subscription-based business trunking scheme in the IMS network, then the individual end-users served by the NGCN are statically connected to the IMS network via "surrogate registration" in association with business trunking as e.g. described in ETSI TS 182.025. Surrogate registration, or also referred to as implicit registration, may be based on a wild card mechanism in the HSS causing groups of end-users to be registered as a single entity in the IMS network. The implication is that all service requests to and from this NGCN are served by the same S-CSCF during the registration period. Above this the suggested S-CSCF load balancing by re-registration will result in selection of the same, already assigned S-CSCF in the case of active sessions with the NGCN. Because of these group characteristics of the registration methods for business trunking, distributing the routing of signaling traffic in the IMS network over different S-CSCF entities in an IMS network for individual end-users within a group is not possible.

Alternatively, if the NGCN relies on a peering-based business trunking scheme, there is no registration in the IMS network of any specific identities of the end-users served by the NGCN.

Traditional telecommunications engineering have shown that call set-up (or call arrival) signaling in TDM based networks such as PSTN has a Poisson distribution. In IMS however the arrival distribution at the S-CSCF is affected by the P-CSCF and IBCF (both functions often implemented on a SBC), especially in the scenario of users served by trunks to an SBC and/or P-CSCF or IBCF wherein the P-CSCF or IBCF may be highly utilized so that distribution of requests arriving at an S-CSCF does not have to exhibit a Poisson distribution. Furthermore, new services e.g. presence updates, messaging, video sharing and others (e.g RCS), which have a highly unpredictable arrival distribution of signaling messages further add to this unpredictability. Hence, conventional solutions for preventing overload conditions cannot be or at least are very difficult to be implemented in an IP-based communication networks such as IMS.

In the article by Makaya et.a. "Load balancing support for self-organizing IMS networks" (submitted for the IEEE Consumer Communications and Networking Conference January 9-11, 2011) a scheme for an IMS network is proposed wherein continuity of a session after failure of a network element, e.g. a P-CSCF or S-CSCF, is achieved. This scheme however deals only with support during failure but not address the problem of preventing network node failures due to e.g. overload.

EP 1 973 295 A1 relates to a call session control server assignment method and system for equalizing loads of a plurality of call session control servers (S-CSCF servers). When an interrogating call session control server (I-CSCF server) sends an interrogation to the HSS server for determining a particular S-CSCF server for registering the user equipment and administering a call session control for the user equipment at the registration time of the user equipment, a reference is made to an S-CSCF selection table for selecting a particular S-CSCF server to be assigned in response to the current operation condition of the respective S-CSCF servers and the like and also the information in the S-CSCF selection table is sent back to the I-CSCF server.

US 2010/208648 A1 describes how a user location is estimated based on an IP address assigned to the user's device/equipment during registration for multimedia application services that are provided over the IP multimedia subsystems (IMS) network. The latitude and longitude information of the user location is obtained based on the IP address assigned to the user device/equipment. Such information is used to determine an appropriate server(s) for establishing an IP multimedia service session. In some embodiments, a closely located IMS server(s) is selected for proxying, interrogating, providing or delivering IP multimedia services. In this manner, each user device/equipment communicates with IMS servers that are located close to the user and thus, the geographically distributed load among the IMS gateway servers can be achieved.

US 2009/271798 A1 discloses a technique for load balancing in networks such as those networks handling telephony applications. Requests from a SIP User Agent Client are sent to a load balancer which then selects a SIP server from among a cluster of servers to handle each request. Requests corresponding to the same session (call) are routed to the same server.

US 2003/110257 A1 discloses load distribution between session initiation protocol (SIP) servers in an intra domain, thereby allowing an effective and fast processing of large-capacity arriving SIP traffic in a domain.

Hence, there is a need in the art for improved methods and systems for dynamic assignment of a serving network node. In particular, there is a need in the art for methods and systems for allow dynamic assignment of a serving network node to a user equipment or network node such that overload and fault situations in the IMS core may be avoided or at least minimized.

### Summary of the invention

It is an object of the invention to reduce or eliminate at least one of the drawbacks in the prior art. I The invention is defined by a method for dynamic assignment of a serving network node according to claim 1, a corresponding network node according to claim 16, a communications system (comprising the network node according to claim 16) according to claim 19 and a computer program product according to claim 20. Further embodiments are defined by the dependent claims.

The invention will be further illustrated with reference to the attached drawings, which schematically show examples according to the invention. It will be understood that the invention is not in any way restricted to these specific examples, the invention is defined by the appended claims.

### Brief description of the drawings

**Fig. 1** depicts a schematic of at least part of a Next Generation Network.
**Fig. 2** depicts a schematic of a conventional system for registration of an UE to an IMS core.
**Fig. 2b** depicts a modified signaling flow associated with registration of a UE to an IMS core according to an embodiment of the invention
**Fig. 3** depicts a schematic of a system for registration of an UE to an IMS core according to one embodiment of the invention.
**Fig. 4** depicts a signaling flow associated with an implementation wherein a registration function RF is located in the P-CSCF.
**Fig. 5** depicts a signaling flow associated with a re-registration with the IMS.
**Fig. 6** depicts a schematic of a system for routing a terminating service request according to one embodiment of the invention.
**Fig. 7** depicts a schematic of a system for routing a originating service request according to another embodiment of the invention.
**Fig. 8** depicts a signaling flow associated with a process for setting up the originating side of a session.
**Fig. 9** depicts a schematic of a system for routing a terminating service request according to another embodiment of the invention (S-CSCF known).
**Fig. 9b** depicts an alternative schematic of a system for routing a terminating service request according to one embodiment of the invention.
**Fig. 10** depicts a system for routing a terminating service request according to yet another embodiment of the invention (S-CSCF unknown).
**Fig. 11** depicts a system for P-CSCF localisation according to various embodiments.
**Fig. 12** depicts a signaling flow associated with a process for setting up the terminating side of a session.
**Fig. 13** depicts a system for routing a terminating service request according to a further embodiment of the invention (S-CSCF unknown; UE not registered)
**Fig. 14** depicts a signaling flow associated with a process for setting up a session based on a service request originating from another network.
**Fig. 15** depicts a signaling flow associated with a process for setting up a first part of a session in a roaming situation.
**Fig. 16** depicts a signaling flow associated with a process for setting up a second part of a session in a roaming situation.
**Fig. 17** depicts a signaling flow associated with a process for setting up a session wherein an application server initiates the session service request.
**Fig. 18** depicts a scheme for updating a user profile according to one embodiment of the invention.

### Detailed description

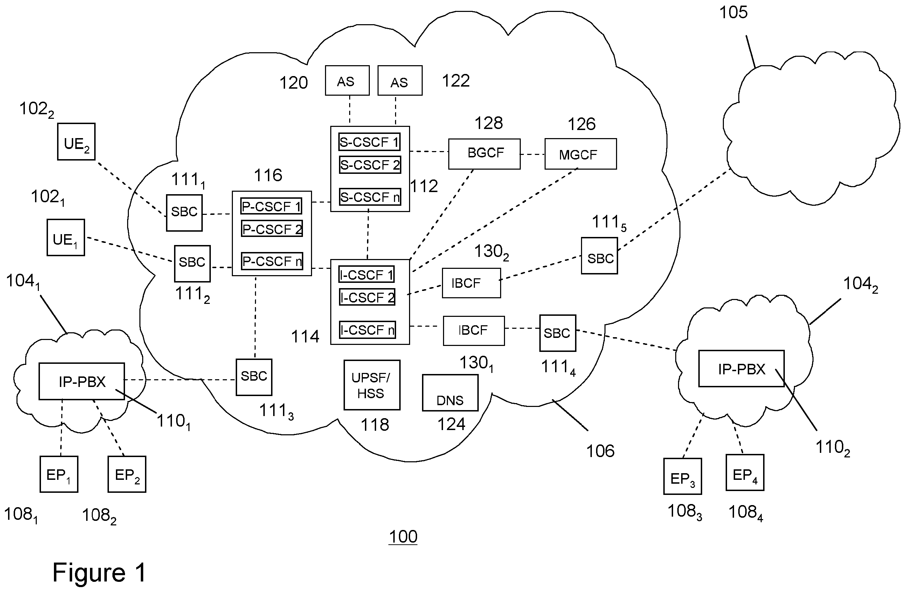

**Fig. 1** depicts a schematic of at least part of an NGN service provisioning system **100.** In particular an IMS-based service provisioning system, comprising individual user equipments UEs **102_{1,2}** and/or one or more other networks, such as other public networks **105,** e.g. IP-based networks of different public network operators, and/or NGCNs **104_{1,2},** i.e. IP-based enterprise networks, connected to an IMS core **106.**

A UE may typically relate to a wireline and/or wireless phones, SIP phones, etc. An IP private branch exchange (IP-PBX) **110₁₋₂** associated with the enterprise network may be responsible for controlling the End Points on the enterprise premises as well as the management of the required services. End-Points (EPs) (i.e. terminals) **108₁₋₄** used in the enterprise network may comprise wireline and/or wireless phones, SIP phones, etc. The UEs and the NGCNs in **Fig.1** are connected to the IMS core using session border controllers (SBCs) **111₁₋₄** for handling the SIP signaling interface, topology hiding and interworking with non-IMS networks.

The IMS core may typically comprise Call/Session Control Functions (CSCF), including Proxy-CSCFs (P-CSCF) **116,** Interrogating-CSCFs (I-CSCF) **114** and Serving-CSCFs (S-CSCF) **112.** A P-CSCF is typically one of the elements of first contact within the IMS core. Using routing information established during the registration to the IMS core, it routes signaling messages (e.g. SIP INVITE) to the S-CSCF associated with a UE. The IBCF (130) (or I-CSCF) is located at the edge of a domain and identifies the correct S-CSCF for incoming SIP requests and forwards the request to that S-CSCF. Its IP address is published in the DNS (not shown) of the domain so that remote servers can find it. The IBCF is a function, usually implemented on a SBC, (as well as the P-CSCF may be implemented on a SBC on the User Network Interface (UNI)), whereby the SBC may also host other functions. In fig.1 the IBCF is shown separate from the SBC, whereby the SBC merely forwards incoming messages to the IBCF functions. Further, the S-CSCF performs the session control services and - in the conventional IMS architecture - acts as a SIP registrar.

Registration of a UE with the IMS in accordance with a conventional IMS registration procedure involves the transfer of a user (service) profile associated with a subscriber to the IMS network to the S-CSCF. A user profile is stored in a database **118** (usually referred to as the Home Subscriber Service (HSS) database or the User Profile Server Function (UPSF)) and may be sent to the S-CSCF over the Cx interface in a standardized XML format. A user profile comprises routing information for routing signaling messages that are either originated from or addressed to a particular UE or one or more trusted application servers **120,122.**

The IMS system may comprise other elements (functional entities or functions)like DNS **124,** MGCF **126 and** BGCF **128** of which their mode of operation need not be necessarily changed for implementing the invention.

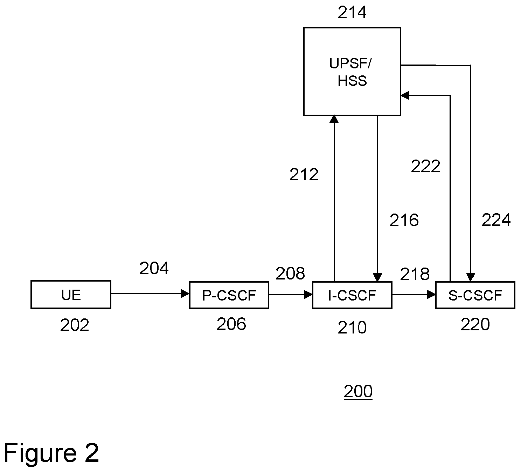

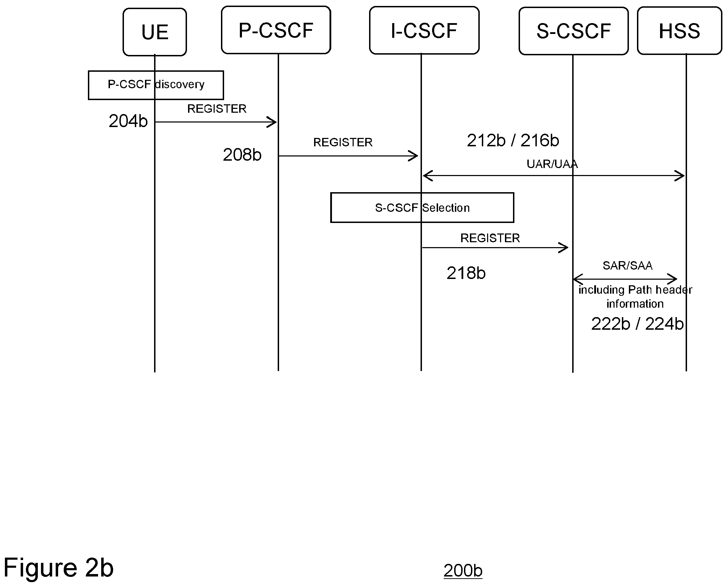

**Fig. 2** depicts a schematic **200** of a conventional IMS registration procedure. The registration process may involve a UE **202** transmitting a registration message **204,208** e.g. a SIP REGISTER message, via the SBC (not shown) and the P-CSCF **206** to the I-CSCF **210** of the IMS core. Upon receipt of the registration message **204,**208, the I-CSCF may send a request **212** for capabilities information to the HSS **214,** which in response sends the requested capabilities information to the I-CSCF(step **216**). This information is subsequently used by the I-CSCF to select a suitable S-CSCF **220.** Capabilities information may include load information associated with the available S-CSCFs so that at registration the assignment of a heavily loaded S-CSCF may be avoided. The registration message may then be forwarded to the selected S-CSCF serving the UE (step **218**), which subsequently authenticates the user with the HSS (step **222**). After successful authentication and registration, the HSS may load the S-CSCF with the service profile of the UE comprising routing information (step **224**).

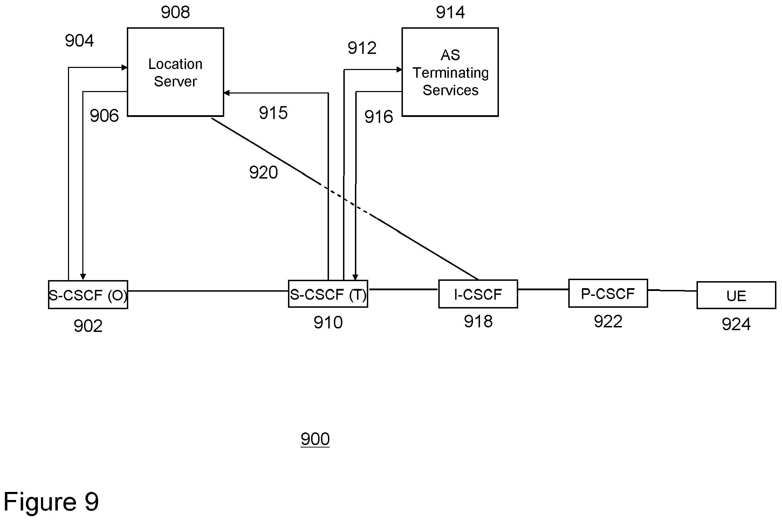

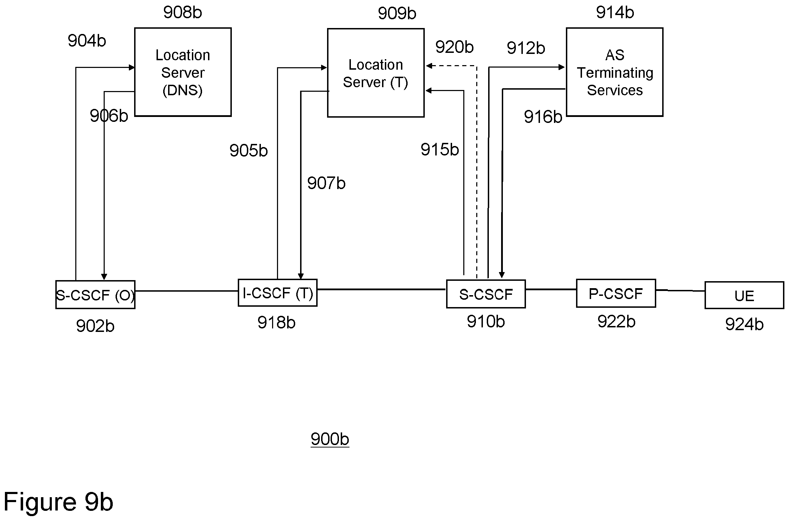

**Fig 2b** depicts a signaling flow for a modified registration process according to one embodiment of this invention. In this signaling flow a UE issues a SIP REGISTER request (**204b**) to a previously discovered P-CSCF (according to the conventional IMS registration procedure). The P-CSCF subsequently forwards the REGISTER request (**208b**) to the I-CSCF of the home network (according to the conventional IMS registration procedure). The I-CSCF selects an appropriate S-CSCF via a User-Authorization-Request (UAR)(**212b**)/ User-Authorization-Answer (UAA) (**216b**) query to the HSS (according to the conventional IMS registration procedure). The I-CSCF subsequently forwards the REGISTER request to the selected S-CSCF (**218b**) (according to the conventional IMS registration procedure). The S-CSCF subsequently notifies the HSS about the current registration via a Server-Assignment-Request (SAR) (**222b**)/ Server-Assignment-Answer (SAA) (**224b**) query (according to the conventional IMS registration procedure). In addition to the conventional IMS registration procedure, the S-CSCF in the registration procedure according to one embodiment of the invention now includes the SIP Path header information in the received REGISTER message in the SAR message to the HSS. The HSS stores this Path header information in association with the user profile of the registered user equipment for later use during a terminating service request handling according to an embodiment of the invention as further detailed in **Fig 9b**.

The services may be identified by a set of initial filter criteria (iFC) in or associated with the user service profile. An iFC may be generally regarded as service routing rules comprising a filter part and a decision part, wherein the filter part comprises so-called Trigger Points, defining one or more filter criteria, which are applied to the incoming service message. The decision part specifies the action(s) to be taken when the incoming message matches with the filter criteria of the rule. The iFC thus comprises information for determining whether or not a SIP message should be routed to a service located in a particular application server. The iFCs are defined in the standard in paragraph B.2.2 of document 3GPP TS 129 228, which is hereby incorporated by reference in this application.

Now turning back to **Fig. 1****,** the application servers (AS) **120,122** may comprise services e.g. voice-centric (VoIP) and/or multimedia services. The VoIP application server may provide a minimum set of features to support the call routing to and from UEs or NGCNs and regulatory and billing requirements. Further, at least one application server may comprise trunking services such as overflow behavior services, wherein certain connections are grouped in an ordered list to handle traffic in a specified manner and/or to handle load behavior services wherein a list of connections that are part of the same trunk will be used in a specified manner to handle the traffic.

If an NGCN **104₁** relies on a subscription-based business trunking scheme, registration of an IP-PBX to the IMS core may involve an SBC **111₃** registering on behalf of the NGCN both the IP-PBX and all individual terminals associated with the IP-PBX via the P-CSCF **116** to the IMS core. Such registration process may involve the transmission of a registration message, e.g. a SIP REGISTER message, via the SBC and the P-CSCF to the I-CSCF of the IMS core in a similar way as described above in relation to individual UEs. After successful authentication and registration, the HSS may provide the S-CSCF with service routing information, allowing the S-CSCF to register the IP-PBX with one or more services in one or more application servers by sending a registration message (such as a SIP REGISTER message) to the application servers identified in the service routing information.

NGCNs are not necessarily connected to the IMS platform based on the subscription-based business trunking scheme. An NGCN may also be configured not to register with the IMS core. Instead an NGCN **104₂** may be directly connected via at least one trunk to an Interconnection Border Control Function (IBCF) **130,** which may be co-located with the SBC **111₄.**

The use of a direct interconnection between the NGCN and the NGN through the IBCF provides the advantage that the IP-PBX and individual users associated with the NGCN are not required to register with the IMS core. Hence problems with regard to "surrogate registration" by the SBC may be avoided and allow the NGN to provide the NGCN with services, including trunking services. The use and the associated advantages of such peering based business trunking scheme are described in pending European Patent applications no. EP10177037.8 and EP 10177055.0, which are hereby incorporated by reference.

In the NGN as depicted in **Fig. 1****,** after registration, individually registered UEs **102** and subscription based NGCNs **104** are tightly coupled with the P-CSCF, I-CSCF and a selected S-CSCF for the duration of the registration period, which may be typically 24 hours or more. Only after the registration period, an UE and/or NGCN may be re-registered with the IMS core, wherein the I-CSCF **114** may perform a certain form of load-balancing or failure control by selecting on the basis of the capabilities information associated with the available S-CSCFs a different, more suitable S-CSCF. Alternatively, as described before, the NGN may also be directly interconnected with one or more NGCNs (other networks) without the use of the conventional registration procedure. In such scheme load balancing on the basis of the registration procedure is not possible at all.

Hence, conventional load balancing schemes on the basis of the registration procedure can provide only very limited forms of load balancing and/or failure control, which are not suitable for responding to fast load fluctuations or node failures and for preventing individual network nodes in the IMS core from overloading. In particular, these schemes are not suitable for preventing network node failures due to e.g. overload. This problem may be solved by configuring the IMS core such that a network node, in particular the serving network node in the IMS core such as the S-CSCF, may be selected upon a service request. Whereas a service request for the purpose of this invention is not to be understood as a (re-)registration request (or (re-)registration message). In this way, at each originating and/or terminating service request received by the IMS core a network node may be selected on the basis of actual signaling load and status information associated with the serving network nodes around the time of the request so that overload situations or fault conditions (e.g. assigned of a UE to a (partially) defect S-CSCF) may be avoided. In that way the overall response time of the individual S-CSCFs may be kept low so that a good throughput of signaling messages is achieved under all circumstances. The proposed solution further allows stabilization of the network during overload conditions and prevention of a complete collapse of one or more S-CSCFs.

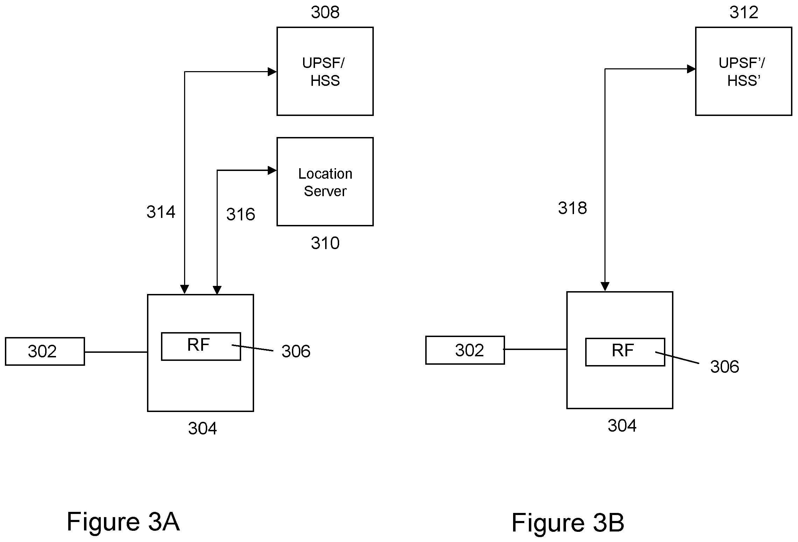

The details of an IMS system for efficiently balancing the signaling load, according to embodiments of the invention, are described hereunder with reference to **Fig. 3****.**

For the purpose of the invention the terms NGCN and IP-PBX may be used interchangeably. Both refer either to a peering based arrangement(104₂ in fig 1) or to a subscription based arrangement (104₁ in fig 1). The latter may send service requests to an IMS system, in a manner equivalent to the registration of/sending of service requests by individual User Equipments.The term other network comprises the terms NGCN or IP-BX as well as any public network (105 in fig. 1)

**Fig. 3A** and **3B** depict schematics of systems for registration of an UE or an NGCN to an IMS core according to one embodiment of the invention. In particular, in **Fig. 3A** an UE or NGCN **302** may send a registration message, e.g. a SIP REGISTER message, to a registering network node **304** associated with the IMS core comprising a registration function **306** (RF).

The registering network node may be implemented in various ways. In one embodiment, the registering network node may relate to a P-CSCF comprising a RF for registering and authenticating the UE to the IMS core. In another embodiment, the registering network node may be implemented as a SBC comprising a RF. In yet another embodiment, the registering network node may be implemented as a SBC comprising P-CSCF functionality.

When the registering network node receives the registration message, the RF is activated, which subsequently registers and authenticates the UE with the USSF/HSS **308** in accordance with the requirements under the appropriate standard. When successfully registered, the RF queries a location server **310** for a location update comprising location information, typically an IP address, on the network node (P-CSCF or SBC) to which the UE or IP-PBX (NGCN) is assigned. After successful registration, the user profile in the HSS reflects that the UE is registered with the IMS core and the location database comprises the location information to which P-CSCF or SBC (comprising P-CSCF functionality) the UE is assigned to during a registration period. The location server comprising the location database may be implemented as separate entity or co-located with the HSS (not shown).

**Fig. 3B** depicts an alternative registration scheme, which differs from the one depicted in **Fig. 3A** in that the RF registers and authenticates the UE or IP-PBX (NGCN) with a modified USSF'/HSS' **312,** so that during the registration the location information associated with the network node (P-CSCF or SBC) to which the UE or IP-PBX is assigned, is stored in the user profile so that when an S-CSCF is requesting a user profile, it will also receive the location of the P-CSCF assigned to the UE.

Hence, in accordance with the registration schemes depicted in **Fig. 3A and 3B****,** the authorization (as part of the registration process) is performed at the border of a trust domain, i.e. the P-CSCF or the SBC. Such registration procedure differs from the current 3GPP IMS registration procedure wherein authorization is executed by the S-CSCF, right in the center of a trust domain, which makes the core network vulnerable to misbehaving UEs, IP-PBXes and other malicious attacks.

When registering directly via a registering network node located at the edge of an administrative domain, e.g. the P-CSCF or the SBC (comprising a P-CSCF function), to the HSS, the signaling load of the S-CSCF due to registration processes may be eliminated and threats originating from repeated registration and de-registrations with the malicious intend to disrupt the IMS core may be avoided or at least significantly reduced.

The registration systems depicted in **Fig. 3A****/B** further provide the effect that upon registration only the UE (IP-PBX) and the registering network node (the P-CSCF or the SBC) are tightly coupled to each other during the relatively long period of registration (also referred to as the "registration period"). During this registration period, which is kept by a registration timer, the system may allow changes in the serving network node (S-CSCF) serving an UE on the basis of the signaling load of individual serving network nodes in the IMS core.

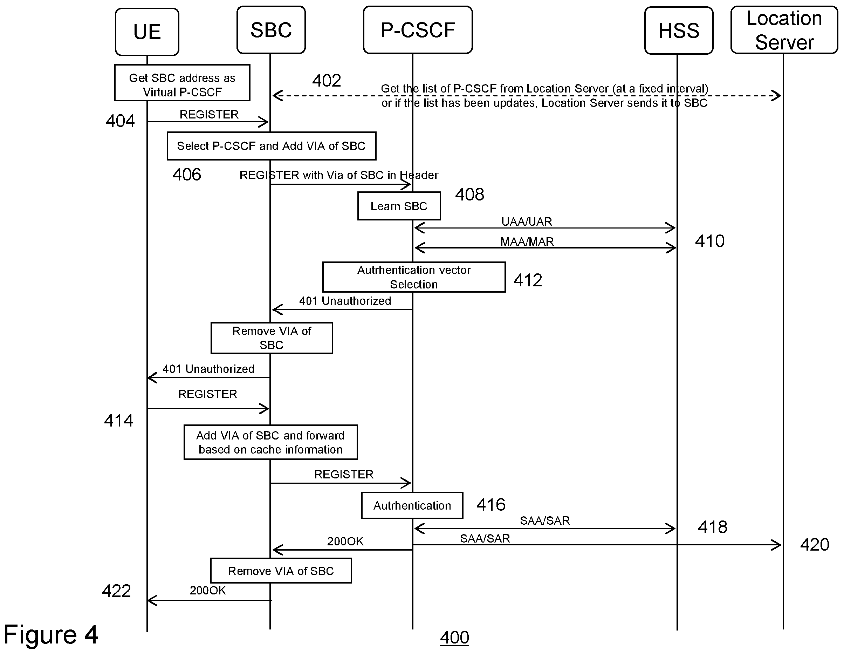

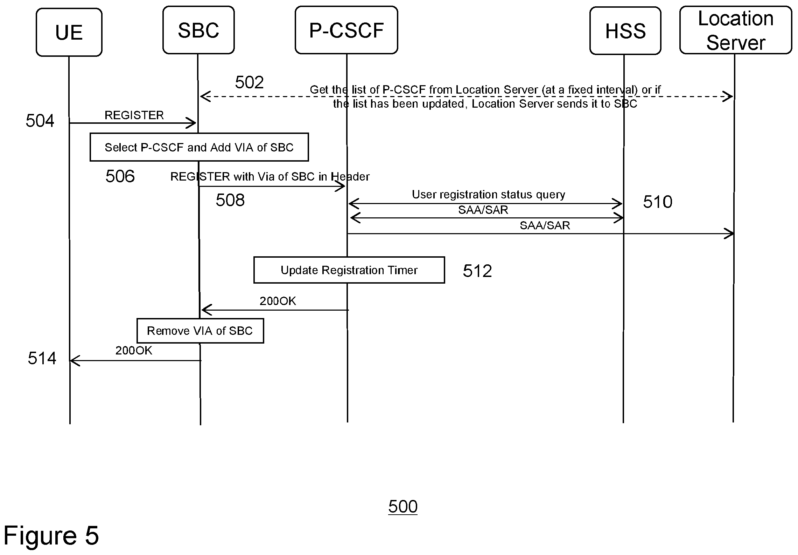

**Fig. 4** and **5** depict signaling flows associated a registration process in accordance with one embodiment of the invention. In particular, **Fig. 4** depicts a signaling flow **400** associated with an implementation wherein a registration function RF is located in the P-CSCF and wherein the RF is configured to register and authenticate to a HSS and to store the location (e.g. its IP address) of the P-CSCF assigned to an UE in a location database (which may be contained in a location server).

In this process, the SBC associated with the UE may request a list of available P-CSCFs from the location server or, alternatively, the location server may provide the SBC with a list of available P-CSCFs at regular intervals (step **402**) for example on the basis of information from a load detection function as proposed in 3GPP TR 23.812. Then, when an unregistered UE sends a registration message to the SBC (step **404**), the SBC may select a P-CSCF in accordance with a certain policy function (step **406**) and relay the registration message to the selected P-CSCF (step **408**). The P-CSCF subsequently stores the SBC address and requests the HSS (step **410**) for one or more authentication vectors comprising authentication parameters, i.e. a random value RAND, an Authentication token AUTN, a signed result XRES, a Cipher Key CK and an Integrity Key IK. The information exchange between the P-CSCF and the HSS may be based on the Diameter protocol using UAA/UAR, MAA/MAR and/or SAA/SAR messages known from 3GPP TS29.228 and TS29.229. These vectors may be stored with the P-CSCF. The RF may select an authentication vector and send a challenge comprising RAND (step **412**) and AUTN back to the UE for authentication of the user.

Upon reception of the challenge, the UE calculates a response RES which is sent in a further registration message via the SBC to the P-CSCF (step **414**). At the P-CSCF the RF may compare XRES with RES and when they match it is decided that the authentication is successful (step **416**). The RF thereafter informs the HSS that the UE is registered with the IMS core for a predetermined registration period (step **418**) and provides the location server with the IP address of the P-CSCF assigned to the UE (step **420**)**.** The registration process is ended by sending SIP 200 OK to the UE (step **422**).

**Fig. 5** depicts a signaling flow associated with a re-registration procedure **500** according to one embodiment of the invention. In this procedure, upon expiry of the registration period the UE may send a registration message for re-registering with the IMS core to the SBC (step **504**). Then, on the basis of the P-CSCF list provided by the location server to the SBC (step **502**), SBC may select the P-CSCF initially assigned to the UE (step **506**) and send the registration message to the P-CSCF (step **508**). The P-CSCF may contact the HSS, in order to check the registration status of the UE (step **510**). On the basis of this information it may determine that the UE is already registered and authenticated with the IMS core so that no authentication challenge is required. The P-CSCF then updates the registration timer (step **512**) by a predetermined value to that the UE is re-registered for a predetermined time.

In contrast with a conventional IMS registration scheme, the IMS registration schemes as described with reference to **Fig. 3** through **5** result in registered UEs, which are not rigidly assigned to a S-CSCF for the whole registration period, thereby allowing conditional assignment of S-CSCF to a UE for a shorter period than the registration period, for example for the period (duration) associated with a session. During a registration period a UE may initiate multiple sessions wherein at each session set-up the IMS system may assign a best-fit S-CSCF to the UE. Hence, such scheme allows real-time load distribution of sessions over the available S-SCSF resources in an IMS network. These sessions may be set-up simultaneously or sequentially or in a combination of the both. They may further relate to the same type or to different types of services requested by a UE or other network.

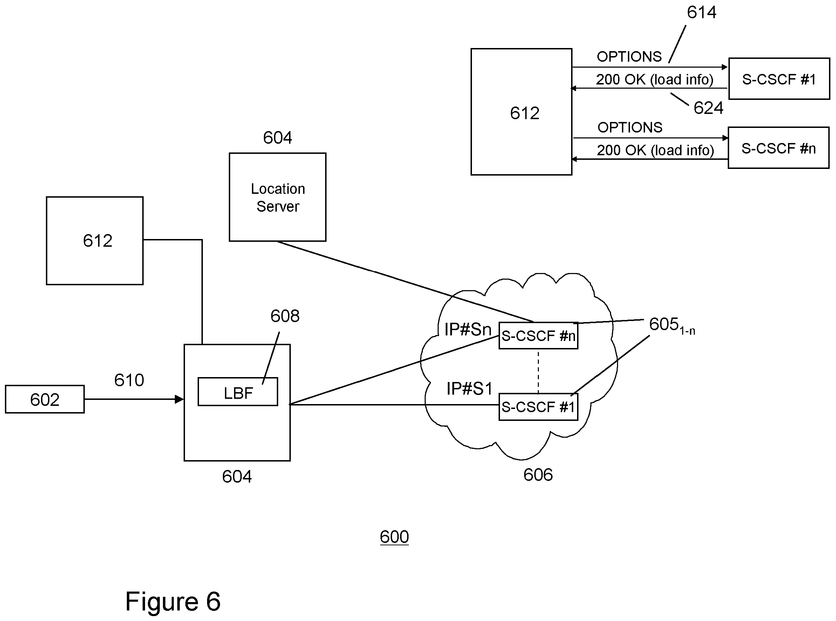

**Fig. 6** depicts a schematic of a system **600** for routing a service request according to one embodiment of the invention. In particular, this system comprises a UE or IP-PBX **602** configured for sending service requests, e.g. SIP based service requests not being registeration requests, **610** to a network node **604** comprising or associated with a load balancing function (LBF) **608** which is configured to select a suitable serving network node amongst a pool of available serving network nodes, e.g. a pool of N S-CSCFs **606** (i.e. S-CSCF#1 - S-CSCF#N **605₁-605ₙ** with associated network addresses IP#S1 - IP#Sn).

In one embodiment, the LBF may be comprised in the registering network node, e.g. the P-CSCF or SBC associated with the UE. In other embodiments, the LBF may be located on one a separate network node, e.g. a server, in or associated with the IMS core, which may be accessed by P-CSCF.

The LBF may be configured to request or receive load information from an external network server, which is configured to monitor the load (e.g. the processor load (CPU) and/or response time) experienced by network nodes, in particular the available set of S-CSCFs, in the IMS core due to routing and handling signaling traffic. Alternatively and/or in addition, the LBF may interact with a Load Detection Function (LDF) **612** as described in 3GPP TR 23.812. The LDF may be executed on a separate server which is located somewhere in the IMS network for obtaining the relevant load information for the LBF to enable selection of the most suitable S-CSCF.

The inset of **Fig. 6** depicts one embodiment of a LDF collecting load information from S-CSCFs in the IMS core. In this embodiment, the LDF may send a SIP OPTIONS message **614** to a first S-CSCF1 requesting the S-CSCF1 to return processor (CPU) load information in the 200 OK SIP response message **626.** Alternatively and/or in addition, the LDF may measure the response time of the S-CSCF. For example it may measure the response time of a SIP message, e.g. a SIP OPTIONS message or another suitable message, and use the time between the transmission of the SIP message an the reception of the response to the SIP message as a parameter for determining the load of a network node. It is submitted that any suitable scheme for collecting load information may be used for the purpose of the invention.

The LBF may request or receive load information associated with available S-CSCFs in the IMS on a regular basis. This information may be stored in a LBF table (a memory cache) and updated such that each time when a load information is required in order to determine a suitable S-CSCF or other network node in the IMS core on the basis of current load information. The LBF may process the load information and select a suitable S-CSCF on the basis of the load information in various ways.

For example, it may select the least loaded S-CSCF, the S-CSCF, which within a predetermined time window is the least loaded or it may randomly select an S-CSCF from a set of S-CSCFs, which have a load below a certain threshold value. In more general, the LBF may select a suitable S-CSCF on the basis of a set of selection rules and the load information.

In one embodiment, the P-CSCF or SBC may store information regarding the UE and its S-CSCF (e.g. UE-ID, S-CSCF ID and the network address of the S-CSCF) in a memory, e.g. serving node table, which may be used by the P-CSCF or SBC in order to route further services requests associated with the same UE directly to the S-CSCF.

This way, when a service request is received by the P-CSCF or the SBC, it may first check whether the serving node table has registered an S-CSCF, which was last used by the UE. If this is the case, the P-CSCF or SBC may assign that S-CSCF to the UE. If not, the LBF may be triggered to select an S-CSCF on the basis current load information in the LBF table. The service request may subsequently be forwarded to the thus selected S-CSCF. In response the selected S-CSCF may send an update request to the location server in order to store the location (IP address) of the S-CSCF assigned to the UE. In other embodiments, the location server may be updated by the P-CSCF or SBC.

Hence, the LBF allows the IMS core to select a best-fit S-CSCF at each service request of a UE on the basis of current load information and/or on information associated with previously assigned S-CSCFs. Such system is thus capable of rapidly responding to load change in individual network nodes of the IMS core thereby effectively preventing overload situations.

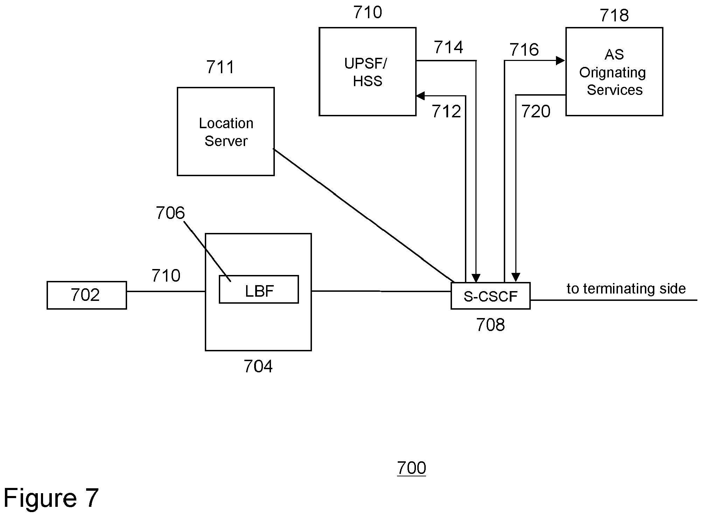

**Fig. 7** depicts a schematic of system **700** for routing an originating service request according to another embodiment of the invention. In particular, **Fig. 7** depicts a system wherein a UE or an IP-PBX (NGCN) **702** is registered to the IMS core using a registration procedure as described with reference to **Fig. 3-5****.** Upon receipt of a service request **710** from the UE, the P-CSCF or SBC **704** comprising or associated with a load balancing function (LBF) **706** may identify on the basis of the serving node table that a particular S-CSCF was previously used by the UE. The P-CSCF may then assign the identified S-CSCF to the UE. In one embodiment, the LBF may first check whether the load associated with the identified S-CSCF is below a predetermined level before it is assigned to UE.

Thereafter, the service request is relayed to the assigned S-CSCF **708.** Upon reception of the service request, the S-CSCF may first check whether it has the service profile of the UE or the IP-PBX available in its cache. If this is not the case, the S-CSCF may send a service profile request **712** to the UPSF/HSS **710**, which in response **714** returns the profile. Further, the S-CSCF (or the P-CSCF; not shown) may update the location database in view of the renewal of the assignment of the S-CSCF.

Then, on the basis of the iFCs in the user profile, the S-CSCF routes the service request **716** to an application server **718** or a several chained application servers (O-AS) comprising the originating service as indicated in the service request. This service may be executed and the service request **720** may be further relayed to the terminating side of the IMS core.

Hence, in contrast with the conventional way of routing an originating request in an IMS core, the S-CSCF, which was not involved in the initial registration of the UE, first checks whether it should request the user profile of the UE or IP-PBX. In some cases, the service profile may have been already stored in the cache in an earlier session. In that case, no service profile request is issued to the HSS.

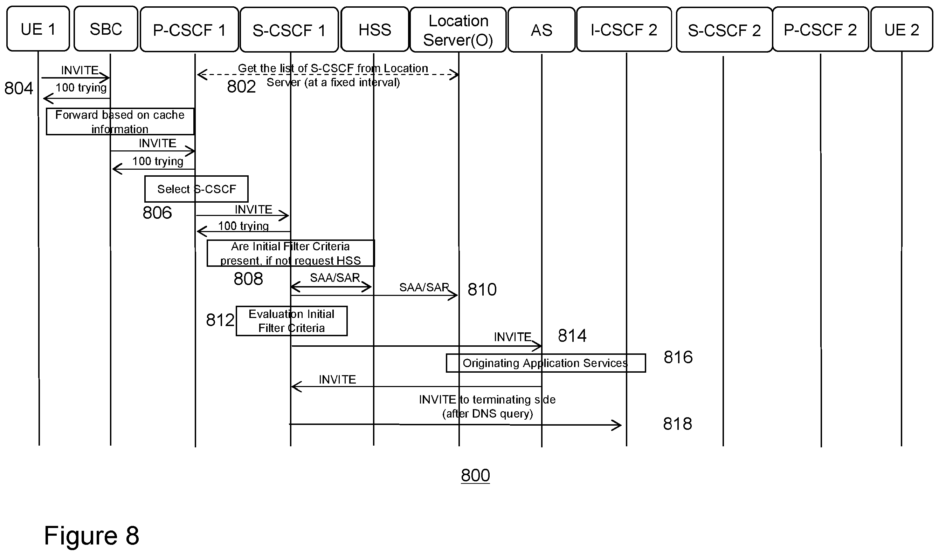

**Fig. 8** depicts a signaling flow **800** associated with a process for setting up the originating side of a session. In this scheme, the P-CSCF may regularly receive a list comprising location information, i.e. the IP addresses of the available S-CSCFs, from a location server (step **802**) and preferably based on information from a load detection function (LDF) as proposed in 3GPP TR 23.812. Then, if a UE sends a service request to the IMS core, the message is relayed via the SBC to the P-CSCF it is registered to (step **804**). Upon receipt of the service request, the P-CSCF may initiate selection of a best-fit S-CSCF. Selection may include checking which S-CSCF was previously assigned to the UE. If such S-CSCF is identified, the P-CSCF may directly route the service request to the identified S-CSCF.

Alternatively, the LBF may check whether on the basis of load information whether the load associated with the identified S-CSCF is below a certain threshold. If the load is above the threshold or if an S-CSCF is not found, the LBF may be triggered to select a suitable S-CSCF (step **806**) on the basis the load information as described in more detail with reference to **Fig. 6****.** After selection of the S-CSCF, the service request is forwarded to the S-CSCF, which requests the user profile associated with the UE from the HSS if it cannot find such profile in its cache (step **808**). Further, and the location database is updated with the S-CSCF assigned to the originating UE (step **810**). After evaluation of the iFC in the user profile (step **812**), the service request is forwarded to an application server comprising an originating service (step **814**). After execution of the originating service (step **816**) the service request is further routed by the S-CSCF to the terminating side (step **818**).

**Fig. 9** depicts a schematic of a system **900** for routing a terminating service request according to one embodiment of the invention. In this case, when an S-CSCF(O) **902** associated with the originating side receives a terminating service request, it first may query a first location request **904** to a location server **908** in order to find out whether a S-CSCF(T) is already assigned to the UE at the terminating side and if so to receive information regarding the last used (assigned) S-CSCF to the terminating UE.

If this is the case, the location server may send the location information of the S-CSCF(T) in a response message **906** to the S-CSCF(O), which subsequently forwards the terminating service request to this terminating serving node **910.** Upon reception, the S-CSCF(T) forwards the terminating service request **912** to one or more application servers (T-AS) **914** comprising the terminating service. Further, the S-CSCF(T) may query the location server with a location update **915** regarding the current S-CSCF(T) assigned to the terminating UE.

After executing the terminating service, the service request **916** is sent back to the S-CSCF(T) for further completion of the session set-up.

To that end, the S-CSCF(T) sends the service request to an I-CSCF **918,** which in response may send a query **920** to the location server (which may be co-located with the UPSF/HSS; not shown) in order to retrieve location information regarding the P-CSCF assigned to the terminating UE. After having received the location information of the assigned P-CSCF, the terminating service request is sent via the P-CSCF **922** to the destination, e.g. a terminating UE or IP-PBX **924.**

**Fig. 9b** depicts a schematic of a system **900b** for routing a terminating service request according to one embodiment of the invention. In this case, when an S-CSCF(O) **902b** associated with the originating side needs to forward a service request to the terminating side, it first may send a first location request **904b** to a general location server **908b** (i.e. DNS) for the address of the I-CSCF (or IBCF) of the terminating side. This I-CSCF **910b,** on receipt of the terminating service request then sends a location request **905b** to a location server **909b** on the terminating side in order to find out whether an S-CSCF(T) is already assigned to the UE at the terminating side and if so to receive information regarding the last used (assigned) S-CSCF to the terminating UE. If this is the case, the location server **909b** may send the location information of the previously assigned S-CSCF(T) in a response message **907b** to the I-CSCF(T), which subsequently forwards the terminating service request to this terminating serving network node (S-CSCF(T)) **910b.** Upon receipt, the S-CSCF(T) forwards the terminating service request **912b** to one or more application servers (T-AS) **914b** arranged for providing one or more application services for the destination of the session setup. Further, the S-CSCF(T) may inform the location server **909b** with a location update **915b** regarding the current S-CSCF(T) assigned to the terminating UE.

After executing the terminating service, the service request **916b** is sent back to the S-CSCF(T) for further completion of the session set-up.

To that end, if the user profile of the terminating UE is not present in the cache of the selected S-CSCF(T),the S-CSCF queries **920b** the location server **909b** (which may be co-located with the UPSF/HSS; not shown) in order to retrieve location information, e.g. a network address, as stored at registration on the basis of the path header by the selected S-CSCF in the HSS/UPSF (see **Fig 2b**), for locating the P-CSCF assigned to the terminating UE. After having received the location information of the assigned P-CSCF, the terminating service request is sent via the P-CSCF **922b** to the destination, e.g. a terminating UE or IP-PBX (NGCN) **924b.**

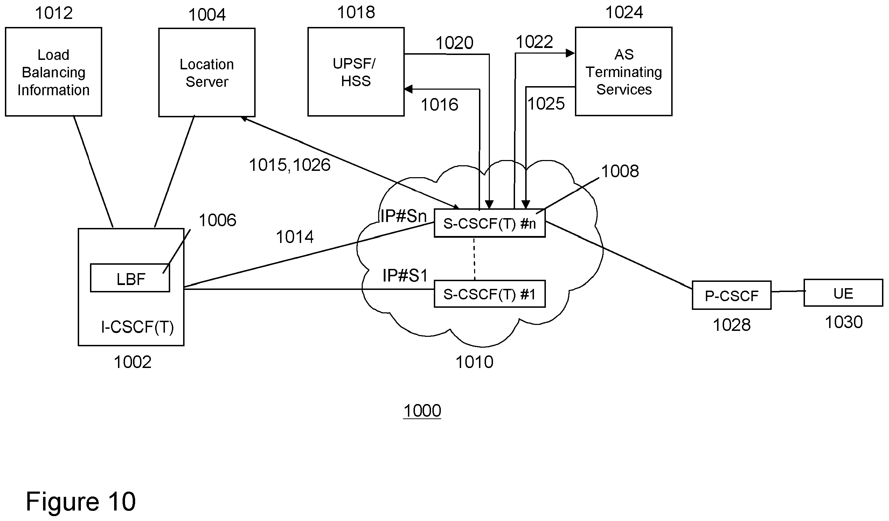

**Fig. 10** depicts a signaling flow **1000** of a system for routing a terminating service request according to yet another embodiment of the invention. In this example, the terminating I-CSCF (or IBCF) **1002** receives, upon request, a message from the location server **1004** that no S-CSCF(T) is assigned to the terminating UE. Hence, in that case the I-CSCF may trigger a LBF **1006** to selected a suitable terminating S-CSCF(T) **1008** from a pool of available S-CSCFs **1010** on the basis of current load information **1012.** After the LBF having selected a suitable S-CSCF(T), the service request **1014** may be routed to that S-CSCF(T), which may send a notification **1015** to the location server for updating its stored information regarding the actual S-CSCF(T) assigned to the terminating UE.

Then, if the user profile of the terminating UE is not present in the cache of the selected S-CSCF(T), a user profile request **1016** may be sent by the S-CSCF(T) to the UPSF/HSS **1018,** which in response **1020** transmits the requested user profile to the S-CSCF(T). The service request **1022** is subsequently sent to one or more terminating application servers **1024** on the basis of the iFCs in the user profile. The service request **1025** may then be routed back to the S-CSCF(T). Further, the S-CSCF(T) may send a query **1026** to the location server for requesting location information, e.g. a network address, for locating the P-CSCF assigned to the terminating UE. On the basis of the requested location information, the service request is subsequently sent via the P-CSCF **1028** to the terminating UE **1030.**

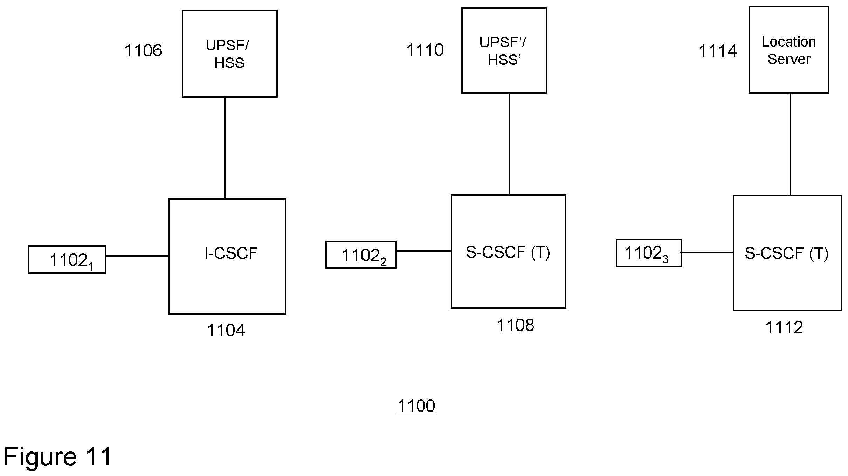

**Fig. 11A-11C** depict schemes for P-CSCF localisation according to various embodiments of the invention. **Fig. 11A** depicts an embodiment wherein, in response to a service request originating from an UE **1102₁,** an I-CSCF **1104** is used for requesting the location of a P-CSCF associated with a terminating UE from a location database. In such scheme the location database is co-located with the UPSF/HSS **1106** so that the conventional Diameter-based Cx interface between the I-CSCF and the UPSF/HSS may be used to request the location information.

**Fig. 11B** depicts an embodiment wherein, in response to a service request from an UE **1102₂,** the S-CSCF(T) **1108** may request the P-CSCF location via the Diameter-based Cx interface between the S-CSCF and the UPSF'/HSS' **1110** using a profile download based on SAA/SAR messages. Hence, in that case, the downloaded user profile comprises the P-CSCF location associated with the terminating UE. Although such location retrieval would be efficient in terms of signaling, this solution requires that the user profile in the UPSF/HSS also comprises the location of the P-CSCF.

Finally, **Fig. 11C** depicts an embodiment wherein in response to a service request from an UE **1102₃** the S-CSCF(T) **1112** requests the location of the P-CSCF from a SIP location server **1114** using the Diameter messages Location Information Request (LIR) and Location Information Answer (LIA).

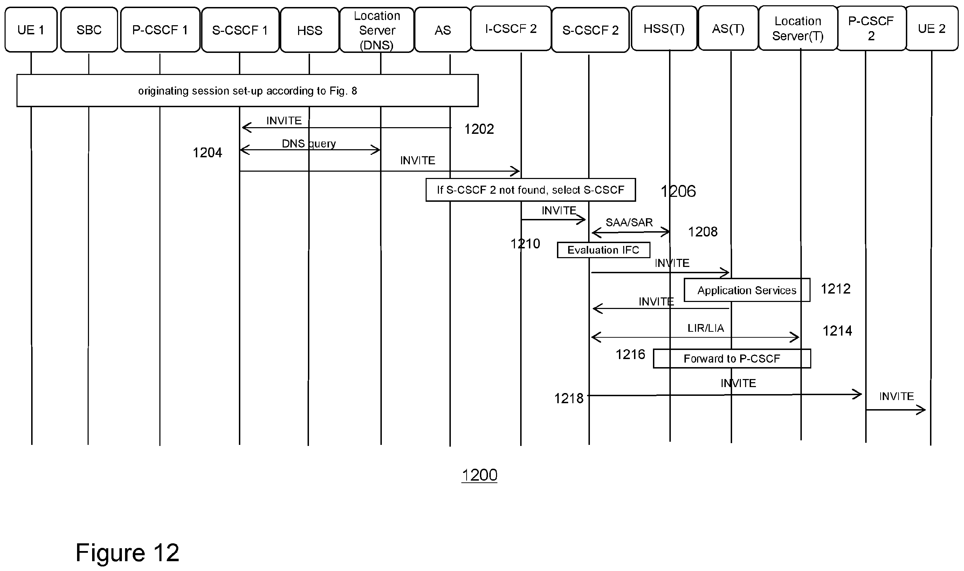

**Fig. 12** depicts a signaling flow **1200** associated with a process for setting up the terminating side of a session. Hence, this signaling flow is the logical sequence of the originating session set-up as described with reference to Fig. 8. In that case, the signaling starts with an AS returning the service request back to the originating S-CSCF(O) (step **1202),** which subsequently queries a location server (DNS; step **1204)** in order to find the location of the terminating side (domain of destination) and then forwards the request to the entrance of the terminating network side, I-CSCF or IBCF (not shown). The terminating I-CSCF determines whether an S-CSCF(T) is assigned to the terminating UE. If this is not the case, the I-CSCF(T) may trigger a LBF in order to retrieve a suitable S-CSCF(T) as described in more detail with reference to **Fig. 10****.** After selecting a suitable S-CSCF(T) (step **1206**), the service request is routed to this terminating S-CSCF(T), which request a user profile download if the user profile associated with the terminating UE is not present in its cache (step **1208**). After having received the user profile and evaluation of the iFCs (step **1210**), the service request is relayed to the appropriate AS for executing one or more terminating services (step **1212**). The service request is then returned to the S-CSCF(T) which requests from a location server which is co-located with the HSS (step **1214**) the location of the P-CSCF assigned to the terminating UE. After the P-CSCF is found (step **1216**), the service request is subsequently relayed via the P-CSCF to the terminating UE (step **1218**).

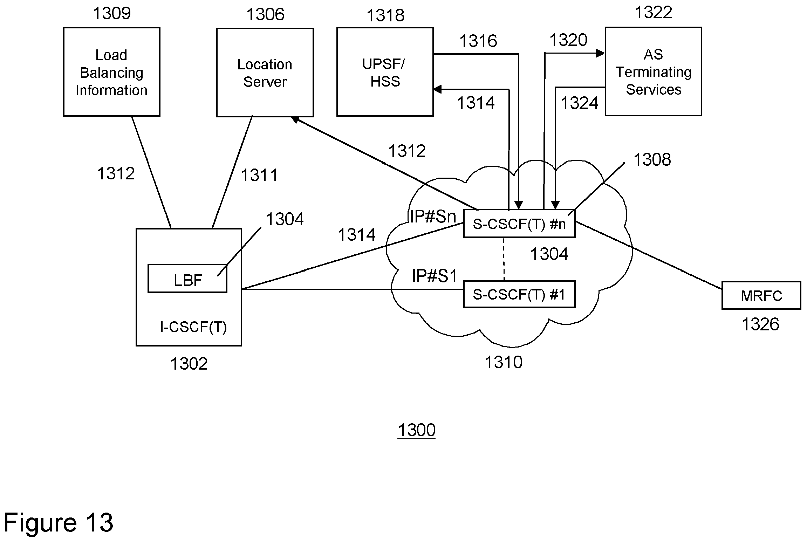

**Fig. 13** depicts a schematic of a system **1300** for routing a terminating service request according to a further embodiment of the invention. In this case, the system is configured to execute a signaling scheme, which similar to the one described with reference to **Fig. 10****.** Hence, the I-CSCF(T) **1302** triggers the LBF **1304** after having received a response from the location server **1306** that no S-CSCF(T) is assigned to the terminating UE. An S-CSCF(T) **1308** selected by the LBF on the basis of load information **1309** from a pool of available S-CSCFs **1310** queries **1312** the location server that its has been assigned to the terminating UE and initiates a user profile download **1314,1316** from the UPSF/HSS **1318** in a similar way as depicted in **Fig. 10****.** The information in the user profile of the terminating UE however indicates in this case that the terminating UE is not registered with the IMS core. The S-CSCF(T) then relays the service request **1320** on the basis of the iFCs to a terminating AS **1322** for handling the session associated with the non-registered terminating UE, e.g. a voice-mail service. The service request **1324** is then further relayed to a Multimedia Resource Function Controller (MRFC) **1326** for further handling of the session. In this example, wherein the terminating UE is not registered with the IMS core, the MRFC will provide an appropriate fault handling like a voice announcement to the originating caller that the terminating user cannot be reached.

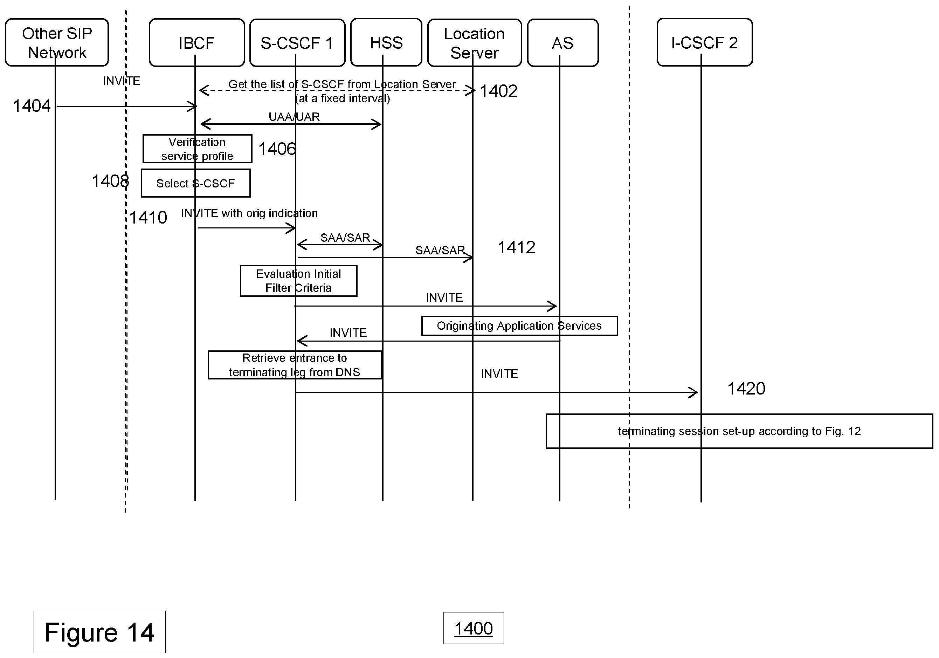

**Fig. 14** depicts a signaling flow **1400** associated with a process for setting up a session according to yet another embodiment of the invention. In particular, the embodiment of **Fig. 14** depicts a signaling flow wherein a session is set up on the basis of a service request originating from another network.

In this embodiment, the process starts at an I-CSCF (or IBCF) receiving a service request originating from another, preferably SIP supporting (e.g. capable of signaling through the use of SIP messages), network (step **1404**). If the other network performs the originating functions, the IBCF (or I-CSCF) is the entry for the terminating side as described in detail with references to figs. 6 and 10.

However in this embodiment a specific case, e.g. on peering based business trunking, is described, wherein the (IMS) network is organized to perform originating services to the originating network (e.g. other network such NGCN/IP-PBX, public network). Then the IBCF (or I-CSCF) may be configured to behave in a similar manner as the P-CSCF in the basic cases described with reference to fig.6. So the I-CSCF or IBCF may be configured to regularly receive a list comprising location information, i.e. the IP addresses of the available S-CSCFs, from a location server (step **1402**). Upon reception of the service request, the I-CSCF may first verify the credentials of the originating network and if originating services are to be provided, the service request, e.g. the request for a session setup (SIP INVITE message), will be forwarded by the IBCF/I-CSCF to an S-CSCF with an added appropriate indication (e.g. the orig-parameter as described in 3GPP 23.228 and 24.229), which forces the S-CSCF to perform originating functionality. Comparable with the process illustrated in fig.8 the IBCF (or I-CSCF) will select the S-CSCF on the basis of information from a location server.

So after selection of the S-CSCF, the service request is forwarded to the S-CSCF(O) (step **1410**) with an indication that forces the S-CSCF to perform originating procedures, Thereafter, the location server is updated with the selected S-CSCF(O) and the session is set-up in a similar way as described with reference to **Fig. 8** for the signaling flows for a session set up for the originating and **Fig. 12** for the signaling flows for the terminating part.

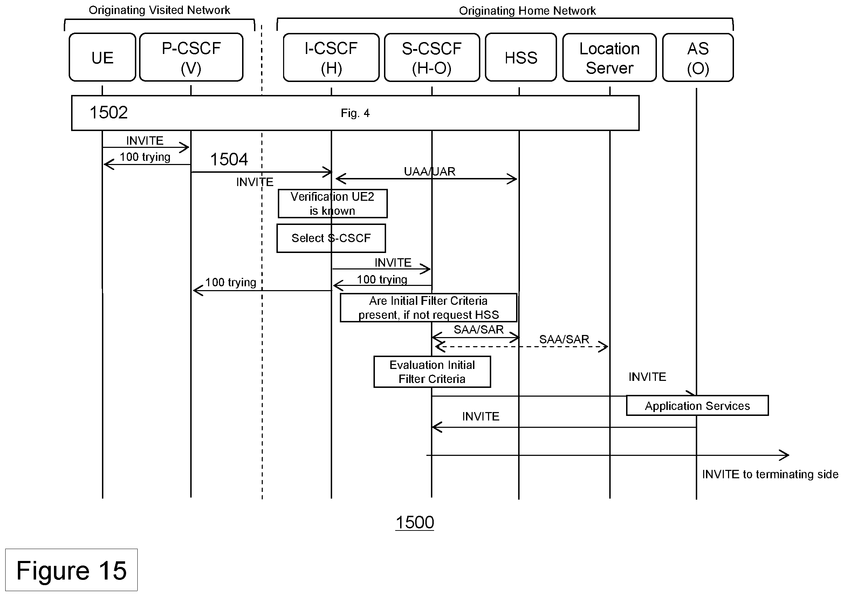

**Fig. 15** depicts a signaling flow **1500** associated with a process for setting up a first part of a session in a roaming situation. In this scheme, both the visited and the home network are configured to select serving network nodes, S-CSCFs, in response to a service request, e.g. SIP INVITE message. In that case, an originating UE may register itself to its home network using e.g. the registration procedure as depicted in **Fig. 4** (step **1502**), wherein the registration will be executed by a registration function RF associated with a P-CSCF or an SBC (comprising P-CSCF functionality) in the originating visited network and wherein the location of the assigned P-CSCF(V) or SBC(V) is stored in a location database of the originating home network.

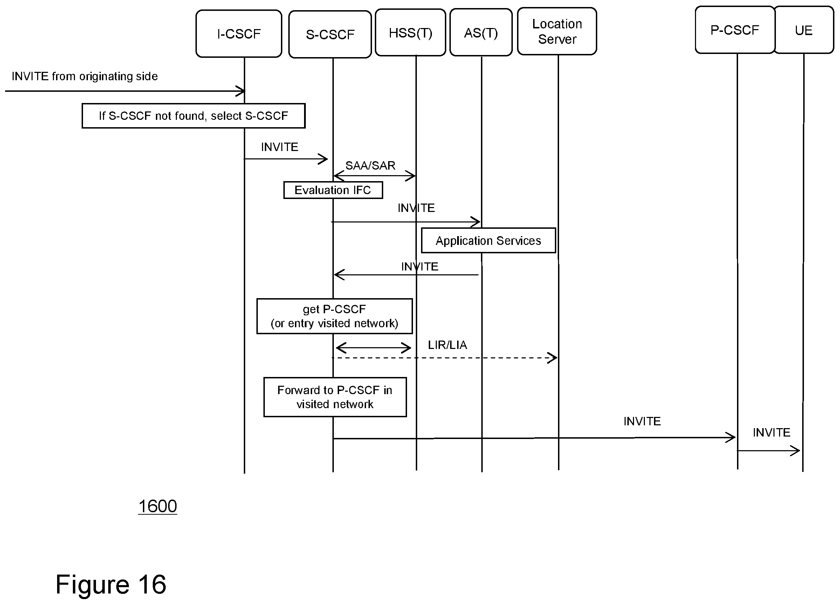

When a roaming UE wants to set-up a session with a terminating UE, a service request is sent via the P-CSCF(V) to the I-CSCF(H) of the originating home network (step **1504**). Thereafter, the session set-up process in the originating part and terminating part of the home network (which is depicted in detail in **Fig. 16**) is handled in a similar way as described with reference to **Fig. 14****.**

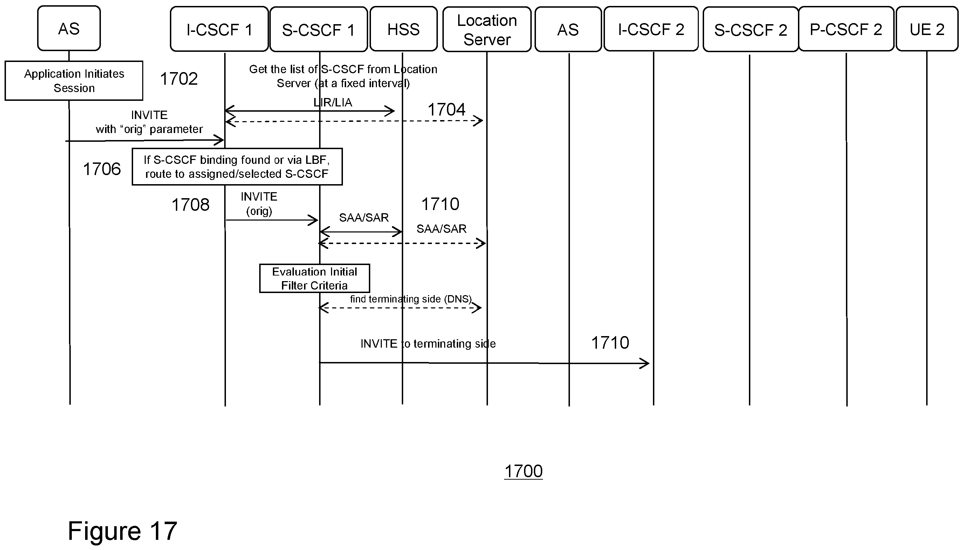

**Fig. 17** depicts a signaling flow **1700** associated with a process for setting up a session with a terminating UE wherein an application server (network node) acts as source of the service request. In that case, the process is started with the AS sending the service request to the I-CSCF **1702** with an indication (e.g. the orig-parameter as described in 3GPP 23.228 and 24.229) that this service request is to be treated as an originating request (such as a request for a session set-up, e.g. a SIP INVITE).

The I-CSCF selects on the bases of available (provided) load information **1704** a best-fit originating S-CSCF(O) (step **1706**) wherein the selection may include checking which S-CSCF was previously assigned to the AS. If such S-CSCF is identified, the I-CSCF may send the service request directly to the identified S-CSCF.

Alternatively, the I-CSCF may request a LBF for check whether the load associated with the identified S-CSCF is below a certain threshold. If this is the case, and the I-CSCF has received feedback from the LBF, the service request may be sent by the I-CSCF to the identified S-CSCF.

If the load associated with the identified S-CSCF is too high or if a previously assigned S-CSCF is not found, the LBF may be triggered and a suitable S-CSCF may be selected on the basis of the provided load information as described in more detail with reference to **Fig. 6** (step **1706**). After selection of the S-CSCF, the service request is forwarded to the assigned S-CSCF (step **1708**), which at its turn requests the profile associated with the AS from the HSS, if it cannot find such profile in its cache (step **1710**). Further, it may update the location database with the S-CSCF assigned to the AS (step **1710**). Thereafter, the service request is forwarded to the terminating side and treated there in a similar way as described with reference to **Fig. 12** for the signaling flows for a session set up for the terminating part

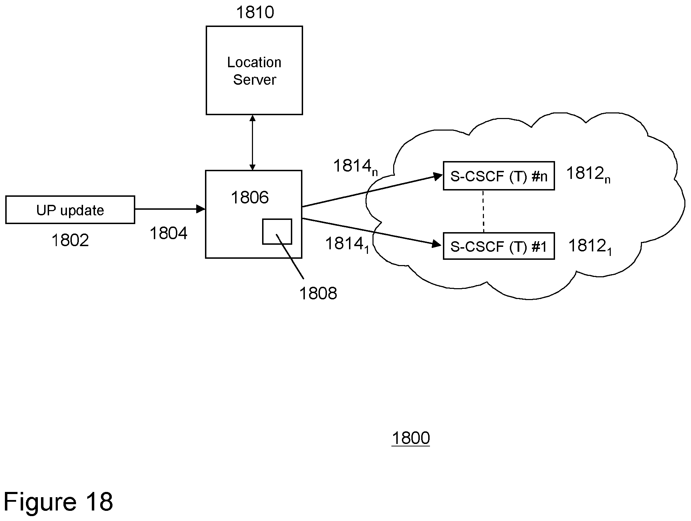

**Fig. 18** depicts a scheme **1800** for updating a user profile according to one embodiment of the invention. In particular, **Fig. 18** depicts a network node **1802** configured for sending a request **1804** for a user profile update to the UPSF/HSS **1806.** In response to this request a profile update function (PUF) **1808** in the UPSF/HSS is triggered. The PUF processes the update by storing the modified profile into the profile database. Further, it requests the location server **1810** for the location information of all available S-CSCFs **1812₁₋ₙ.** Thereafter, it sends on the basis of the location information refresh messages **1814₁₋ₙ** comprising a user profile identifier to all S-CSCFs. Upon reception of the refresh message, each S-CSCF checks on the basis of the identifier whether the (old) user profile is stored in its memory (cache) and if this is the case, that user profile entry is deleted.

The profile update scheme as depicted in **Fig. 18** ensures an S-SCSF does not process messages on the basis of user profiles which are no longer valid. This way an S-CSCF will always uses the most recent user profile available in the UPSF/HSS.

It is to be understood that any feature described in relation to any one embodiment may be used alone, or in combination with other features described, and may also be used in combination with one or more features of any other of the embodiments, or any combination of any other of the embodiments. One embodiment of the invention may be implemented as a program product for use with a computer system. The program(s) of the program product define(s) functions of the embodiments (including the methods described herein) and may be contained on a variety of computer-readable storage media. Illustrative computer-readable storage media include, but are not limited to: (i) non-writable storage media (e.g., read-only memory devices within a computer such as CD-ROM disks readable by a CD-ROM drive, flash memory, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory) on which alterable information is stored. Moreover, the invention is not limited to the embodiments described above, which may be varied within the scope of the accompanying claims.

## Claims

1. Method for dynamic assignment of a serving network node (112) in an IMS communications network (106)comprising a predetermined number of serving network nodes (112), said method comprising:
a network node receiving a service request associated with a user equipment (102), another network (104, 105), or an application server (120, 122), and wherein the service request is not a request for registration or re-registration;
providing load information to the network node associated with said serving network nodes (112) in the IMS communications network;
in response to said service request, the network node assigning one of said predetermined number of serving network nodes (112) to said user equipment (102), said other network (104, 105) or said application server (120, 122) on the basis of said load information;
and the assigned serving network node routing said service request to an application server comprising a service associated with the service request.

2. Method according to claim 1, wherein said load information is provided in response to said service request.

3. Method according to claim 1, wherein said load information is provided at predetermined time intervals.

4. Method according to any one of claims 1-3 wherein said IMS communications network further comprises a location database containing location information associated with said predetermined number of serving network nodes.

5. Method according to any one of the preceding claims wherein said load information comprises response time information and/or CPU resource information associated with at least part of said serving network nodes.

6. Method according to any one of the preceding claims comprising:
receiving a list identifying at least part of said predetermined number of serving network nodes, said list further comprising location information associated with said serving network nodes;
receiving load information associated with at least part of said predetermined number of serving network nodes;
selecting a serving network node from said list on the basis of selection rules and said load information;
assigning said selected serving network node to said user equipment, said other network or said application server.

7. Method according to any one of the preceding claims further comprising:
registering an user equipment on the basis of an access network node associated with said IMS communications network.

8. Method according to claim 7 comprising:
assigning an access network node at the border of said IMS communications network to said user equipment, the access network node being a P-CSCF or a session border controller;
executing a registration function associated with said access network node;
storing said registration in a subscriber database comprising user profiles associated with subscribers to services of said IMS communications network;
storing location information in a location database.

9. Method according to any one of the preceding claims further comprising:
sending said service request to said assigned serving network node;
the assigned serving network node requesting a user profile associated with said user equipment if a memory of said assigned serving network node does not comprise said user profile.

10. Method according to claim 4 wherein said service request is a terminating service request and wherein said location database further comprises location information associated with access network nodes assigned to user equipment registered with the IMS communications network, said method further comprising:
if the terminating user equipment associated with said terminating service request is registered with said IMS communications network, requesting said location database for the location information associated with said access network node assigned to said terminating user equipment.

11. Method according to claim 10 comprising:
routing said terminating service request via said access network node to said terminating user equipment.

12. Method according to any one of the preceding claims comprising:
updating a user profile associated with a subscriber to services of said IMS communications network;
in response to said user profile update, deleting one or more user profiles stored in a memory of at least part of said predetermined number of serving network nodes.

13. Method according to claim 12 further comprising:
sending a user profile update message to a subscriber database, being a UPSF/HSS, comprising user profiles associated with subscribers to services of said IMS communications network;
updating said user profile in said subscriber database;
said subscriber database requesting location information associated with at least a part of said predetermined number of serving network nodes;
transmitting a user profile refresh message to said serving network nodes;
if said user profile is stored in a memory, removing said user profile entry from said memory.

14. Method according to any one of the preceding claims wherein said service request is received by an SBC, an P-CSCF, an IBCF, an S-CSCF or an I-CSCF.

15. Method according to any one of the preceding claims wherein said location database is co-located with said subscriber database or wherein said location database is located on a separate network node.

16. Network node, configured for dynamic assignment of a serving network node (112) wherein said serving network node is configured for routing a service request to an application server comprising a service associated with the service request in an IMS communications network (106), comprising a predetermined number of serving network nodes (112), said network node comprising:
means for receiving the service request associated with an user equipment (102), another network (104, 105) or an application server (120, 122), and wherein the service request is not a request for registration or re-registration;
means for receiving load information associated with at least part of said predetermined number of serving network nodes (112) in the IMS communications network;
means for assigning one of said predetermined number of serving network nodes (112) to said user equipment (102), said another network (104, 105) or said application server (120, 122) when said means for receiving receive a service request, said assigning being based on said load information.

17. Network node according to claim 16 further comprising:
means for sending assignment information identifying user equipment, another network or an application server assigned to at least one of said predetermined number of serving network nodes.

18. Network node according to claims 16 or 17 further comprising:
means for receiving a user profile refresh message;
means for removing a user profile entry from a memory of said network node if said memory comprises the user profile identified in said user profile refresh message.

19. Communications system, configured for dynamic assignment of a serving network node (112) to at least one user equipment (102), another network (104, 105) or an application server (120, 122) upon receipt of a service request not being a request for registration or re-registration, said IMS communications network (106) comprising a predetermined number of serving network nodes (112) and
at least one network node according to any of claims 16-18,
a subscriber database server (118) comprising user profiles associated with subscribers to said IMS communications network (106), said subscriber database server (118) further comprising:
means for updating a user profile stored in a memory of said server (118);
means for receiving location information associated with all available serving network nodes (112);
means for transmitting a user profile refresh message to said all available serving network nodes (112), so that if said user profile is stored in a memory of one or more of said serving network nodes (112), said serving network node (112) will remove said user profile entry from said memory
and a location server (310) comprising a location database comprising location information associated with said predetermined number of serving network nodes (112); assignment information identifying user equipment (102), another network (104, 105) or an application server (120, 122) assigned to at least one of said predetermined number of serving network nodes (112); and location information associated with access network nodes assigned to user equipment (102) registered with the IMS communications network (106), said location server (310) further comprising:
means for receiving and transmitting assignment information identifying user equipment (102), another network (104, 105) or said application server (120, 122) assigned to at least one of said predetermined number of serving network nodes (112);
means for receiving and transmitting location information associated with said predetermined number of serving network nodes (112) and/or with said access network nodes assigned to user equipment (102) registered with the IMS communications network (106).

20. A computer program product, the computer program product comprising software code portions configured for, when run by a computer, executing the method according to any of claims 1-15.

## Patentansprüche

1. Verfahren zur dynamischen Zuweisung eines bedienenden Netzwerkknotens (112) in einem IMS-Kommunikationsnetzwerk (106), das eine vorgegebene Anzahl bedienender Netzwerkknoten (112) aufweist, wobei das Verfahren umfasst:
ein Netzwerkknoten empfängt eine Dienstanfrage, die einem Teilnehmergerät (102), einem anderen Netzwerk (104, 105) oder einem Anwendungsserver (120, 122) zugeordnet ist, und wobei die Dienstanfrage keine Anfrage zur Registrierung oder erneuten Registrierung ist;
das Bereitstellen von Lastinformationen an den Netzwerkknoten in Zusammenhang mit den bedienenden Netzwerkknoten (112) in dem IMS-Kommunikationsnetzwerk;
als Reaktion auf die Dienstanfrage weist der Netzwerkknoten einen der vorgegebenen Anzahl bedienender Netzwerkknoten (112) dem Teilnehmergerät (102), dem anderen Netzwerk (104, 105) oder dem Anwendungsserver (120, 122) auf der Grundlage der Lastinformationen zu;
und der zugewiesene bedienende Netzwerkknoten routet die Dienstanfrage an einen Anwendungsserver, der einen Dienst aufweist, der der Dienstanfrage zugeordnet ist.

2. Verfahren nach Anspruch 1, wobei die Lastinformationen als Reaktion auf die Dienstanfrage bereitgestellt werden.

3. Verfahren nach Anspruch 1, wobei die Lastinformationen bei vorbestimmten Zeitintervallen bereitgestellt werden.

4. Verfahren nach einem der Ansprüche 1-3, wobei das IMS-Kommunikationsnetzwerk ferner eine Ortsdatenbank aufweist, die Ortsinformationen enthält, die der vorgegebenen Anzahl bedienender Netzwerkknoten zugeordnet sind.

5. Verfahren nach einem der vorhergehenden Ansprüche, wobei die Lastinformationen Antwortzeitinformationen und/oder CPU-Ressourceninformationen in Zusammenhang mit mindestens einem Teil der bedienenden Netzwerkknoten umfassen.

6. Verfahren nach einem der vorhergehenden Ansprüche, das umfasst:
das Empfangen einer Liste, die mindestens einen Teil der vorgegebenen Anzahl bedienender Netzwerkknoten identifiziert, wobei die Liste ferner Ortsinformationen enthält, die den bedienenden Netzwerkknoten zugeordnet sind;
das Empfangen von Lastinformationen, die mindestens einem Teil der vorgegebenen Anzahl bedienender Netzwerkknoten zugeordnet sind;
das Auswählen eines bedienenden Netzwerkknotens aus der Liste auf der Grundlage von Auswahlregeln und der Lastinformationen;
das Zuweisen des ausgewählten bedienenden Netzwerkknotens an das Teilnehmergerät, das andere Netzwerk oder den Anwendungsserver.

7. Verfahren nach einem der vorhergehenden Ansprüche, das ferner umfasst:
das Registrieren eines Teilnehmergeräts auf der Grundlage eines Zugangsnetzwerkknotens in Zusammenhang mit dem IMS-Kommunikationsnetzwerk.

8. Verfahren nach Anspruch 7, das umfasst:
das Zuweisen eines Zugangsnetzwerkknotens an der Grenze des IMS-Kommunikationsnetzwerks an das Teilnehmergerät, wobei der Zugangsnetzwerkknoten eine P-CSCF oder ein Session Border Controller ist;
das Ausführen einer Registrierfunktion in Zusammenhang mit dem Zugangsnetzwerkknoten;
das Speichern der Registrierung in einer Teilnehmerdatenbank, die Benutzerprofile aufweist, die Teilnehmern an Diensten des IMS-Kommunikationsnetzwerks zugeordnet sind;
das Speichern von Ortsinformationen in einer Ortsdatenbank.

9. Verfahren nach einem der vorhergehenden Ansprüche, das ferner umfasst:
das Senden der Dienstanfrage an den zugewiesenen bedienenden Netzwerkknoten;
wobei der zugewiesene bedienende Netzwerkknoten ein Benutzerprofil anfragt, das dem Teilnehmergerät zugeordnet ist, wenn ein Speicher des zugewiesenen bedienenden Netzwerkknotens das Benutzerprofil nicht enthält.

10. Verfahren nach Anspruch 4, wobei die Dienstanfrage eine Abschlussdienstanfrage ist und wobei die Ortsdatenbank ferner Ortsinformationen enthält, die Zugangsnetzwerkknoten zugeordnet sind, die einem Teilnehmergerät zugewiesen sind, das bei dem IMS-Kommunikationsnetzwerk registriert ist, wobei das Verfahren ferner umfasst:
wenn das Abschlussteilnehmergerät, das der Abschlussdienstanfrage zugeordnet ist, bei dem IMS-Kommunikationsnetzwerk registriert ist, das Anfragen der Ortsdatenbank nach den Ortsinformationen, die dem Zugangsnetzwerkknoten zugeordnet sind, der dem Abschlussteilnehmergerät zugewiesen ist.

11. Verfahren nach Anspruch 10, das umfasst:
das Routen der Abschlussdienstanfrage über den Zugangsnetzwerkknoten an das Abschlussteilnehmergerät.

12. Verfahren nach einem der vorhergehenden Ansprüche, das umfasst:
das Aktualisieren eines Benutzerprofils, das einem Teilnehmer an Diensten des IMS-Kommunikationsnetzwerks zugeordnet ist;
als Reaktion auf die Benutzerprofilaktualisierung das Löschen eines oder mehrerer Benutzerprofile, die in einem Speicher von mindestens einem Teil der vorgegebenen Anzahl bedienender Netzwerkknoten gespeichert sind.

13. Verfahren nach Anspruch 12, das ferner umfasst:
das Senden einer Benutzerprofilaktualisierungsnachricht an eine Teilnehmerdatenbank, die eine UPSF/ein HSS ist, die Benutzerprofile aufweist, die Teilnehmern an Diensten des IMS-Kommunikationsnetzwerks zugeordnet sind;
das Aktualisieren des Benutzerprofils in der Teilnehmerdatenbank;
wobei die Teilnehmerdatenbank Ortsinformationen anfragt, die mindestens einem Teil der vorgegebenen Anzahl bedienender Netzwerkknoten zugeordnet sind;
das Übertragen einer Benutzerprofilauffrischungsnachricht an die bedienenden Netzwerkknoten;
wenn das Benutzerprofil in einem Speicher gespeichert ist, das Entfernen des Benutzerprofileintrags aus dem Speicher.

14. Verfahren nach einem der vorhergehenden Ansprüche, wobei die Dienstanfrage von einem SBC, einer P-CSCF, einer IBCF, einer S-CSCF oder einer I-CSCF empfangen wird.

15. Verfahren nach einem der vorhergehenden Ansprüche, wobei die Ortsdatenbank zusammen mit der Teilnehmerdatenbank angeordnet ist oder wobei die Ortsdatenbank auf einem separaten Netzwerkknoten angeordnet ist.

16. Netzwerkknoten, der zur dynamischen Zuweisung eines bedienenden Netzwerkknotens (112) ausgebildet ist, wobei der bedienende Netzwerkknoten zum Routen einer Dienstanfrage an einen Anwendungsserver ausgebildet ist, der einen Dienst aufweist, der der Dienstanfrage in einem IMS-Kommunikationsnetzwerk (106) zugeordnet ist, das eine vorgegebene Anzahl bedienender Netzwerkknoten (112) aufweist, wobei der Netzwerkknoten aufweist:
eine Einrichtung zum Empfangen der Dienstanfrage, die einem Teilnehmergerät (102), einem anderen Netzwerk (104, 105) oder einem Anwendungsserver (120, 122) zugeordnet ist, und wobei die Dienstanfrage keine Anfrage zur Registrierung oder erneuten Registrierung ist;
eine Einrichtung zum Empfangen von Lastinformationen, die mindestens einem Teil der vorgegebenen Anzahl bedienender Netzwerkknoten (112) in dem IMS-Kommunikationsnetzwerk zugeordnet sind;
eine Einrichtung zum Zuweisen eines der vorgegebenen Anzahl bedienender Netzwerkknoten (112) an das Teilnehmergerät (102), das andere Netzwerk (104, 105) oder den Anwendungsserver (120, 122), wenn die Einrichtung zum Empfangen eine Dienstanfrage empfängt, wobei das Zuweisen auf den Lastinformationen basiert.

17. Netzwerkknoten nach Anspruch 16, der ferner aufweist:
eine Einrichtung zum Senden von Zuweisungsinformationen, die ein Teilnehmergerät, ein anderes Netzwerk oder einen Anwendungsserver identifizieren, die mindestens einem der vorgegebenen Anzahl bedienender Netzwerkknoten zugewiesen sind.

18. Netzwerkknoten nach Anspruch 16 oder 17, der ferner aufweist:
eine Einrichtung zum Empfangen einer Benutzerprofilauffrischungsnachricht;
eine Einrichtung zum Entfernen eines Benutzerprofileintrags aus einem Speicher des Netzwerkknotens, wenn der Speicher das Benutzerprofil aufweist, das in der Benutzerprofilauffrischungsnachricht identifiziert ist.

19. Kommunikationssystem, das zur dynamischen Zuweisung eines bedienenden Netzwerkknotens (112) an mindestens ein Teilnehmergerät (102), ein anderes Netzwerk (104, 105) oder einen Anwendungsserver (120, 122) bei Erhalt einer Dienstanfrage, die keine Anfrage zur Registrierung oder erneuten Registrierung ist, ausgebildet ist, wobei das IMS-Kommunikationsnetzwerk (106) eine vorgegebene Anzahl bedienender Netzwerkknoten (112) aufweist und
mindestens einen Netzwerkknoten nach einem der Ansprüche 16-18,
wobei ein Teilnehmerdatenbankserver (118) Benutzerprofile aufweist, die Teilnehmern an dem IMS-Kommunikationsnetzwerk (106) zugeordnet sind, wobei der Teilnehmerdatenbankserver (118) ferner aufweist:
eine Einrichtung zum Aktualisieren eines Benutzerprofils, das in einem Speicher des Servers (118) gespeichert ist;
eine Einrichtung zum Empfangen von Ortsinformationen, die allen verfügbaren bedienenden Netzwerkknoten (112) zugeordnet sind;
eine Einrichtung zum Übertragen einer Benutzerprofilauffrischungsnachricht an die allen verfügbaren bedienenden Netzwerkknoten (112), sodass, falls das Benutzerprofil in einem Speicher eines oder mehrerer der bedienenden Netzwerkknoten (112) gespeichert ist, der bedienende Netzwerkknoten (112) den Benutzerprofileintrag aus dem Speicher entfernen wird
und einen Ortsserver (310), der eine Ortsdatenbank aufweist, die Ortsinformationen aufweist, die der vorgegebenen Anzahl bedienender Netzwerkknoten (112) zugeordnet sind; Zuweisungsinformationen, die ein Teilnehmergerät (102), ein anderes Netzwerk (104, 105) oder einen Anwendungsserver (120, 122) identifizieren, die mindestens einem der vorgegebenen Anzahl bedienender Netzwerkknoten (112) zugewiesen sind; und Ortsinformationen, die Zugangsnetzwerkknoten zugeordnet sind, die einem Teilnehmergerät (102) zugewiesen sind, das bei dem IMS-Kommunikationsnetzwerk (106) registriert ist, wobei der Ortsserver (310) ferner aufweist:
eine Einrichtung zum Empfangen und Übertragen von Zuweisungsinformationen, die ein Teilnehmergerät (102), ein anderes Netzwerk (104, 105) oder den Anwendungsserver (120, 122) identifizieren, die mindestens einem der vorgegebenen Anzahl bedienender Netzwerkknoten (112) zugewiesen sind;
eine Einrichtung zum Empfangen und Übertragen von Ortsinformationen, die der vorgegebenen Anzahl bedienender Netzwerkknoten (112) zugeordnet sind und/oder den Zugangsnetzwerkknoten, die einem Teilnehmergerät (102) zugewiesen sind, das bei dem IMS-Kommunikationsnetzwerk (106) registriert ist.

20. Computerprogrammprodukt, wobei das Computerprogrammprodukt Softwarecodeabschnitte aufweist, die dafür konfiguriert sind, wenn sie von einem Computer ausgeführt werden, das Verfahren nach einem der Ansprüche 1-15 durchzuführen.

## Revendications

1. Procédé d'assignation dynamique d'un nœud de réseau de desserte (112) dans un réseau de communication IMS (106) comprenant un nombre prédéterminé de nœuds de réseau de desserte (112), ledit procédé comprenant :
la réception, par un nœud de réseau, d'une demande de service associée à un équipement utilisateur (102), à un autre réseau (104, 105) ou à un serveur d'applications (120, 122), et dans lequel la demande de service n'est pas une demande pour un enregistrement ou un ré enregistrement,
la fourniture d'informations sur la charge au nœud de réseau associé aux dits nœuds de réseau de desserte (112) dans le réseau de communication IMS,
en réponse à ladite demande de service, l'assignation par le nœud de réseau de l'un dudit nombre prédéterminé de nœuds de réseau de desserte (112) au dit équipement utilisateur (102), au dit autre réseau (104, 105) ou au dit serveur d'applications (120, 122) sur la base desdites informations sur la charge,
et l'acheminement, par ledit nœud de réseau de desserte assigné, de ladite demande de service à un serveur d'applications comprenant un service associé à la demande de service.

2. Procédé selon la revendication 1, dans lequel lesdites informations sur la charge sont fournies en réponse à ladite demande de service.

3. Procédé selon la revendication 1, dans lequel lesdites informations sur la charge sont fournies à des intervalles de temps prédéterminés.

4. Procédé selon l'une quelconque des revendications 1 à 3, dans lequel ledit réseau de communication IMS comprend en outre une base de données d'emplacements contenant des informations sur des emplacements associées au dit nombre prédéterminé de nœuds de réseau de desserte.

5. Procédé selon l'une quelconque des revendications précédentes, dans lequel lesdites informations sur la charge comprennent des informations sur des temps de réponse et/ou des informations sur des ressources d'unité centrale associées à au moins une partie desdits nœuds de réseau de desserte.

6. Procédé selon l'une quelconque des revendications précédentes, comprenant :
la réception d'une liste identifiant au moins une partie dudit nombre prédéterminé de nœuds de réseau de desserte, ladite liste comprenant en outre des informations d'emplacements associées aux dits nœuds de réseau de desserte,
la réception d'informations sur la charge associées à au moins une partie dudit nombre prédéterminé de nœuds de réseau de desserte,
la sélection d'un nœud de réseau de desserte à partir de ladite liste sur la base de règles de sélection et desdites informations sur la charge,
l'assignation dudit nœud de réseau de desserte sélectionné au dit équipement utilisateur, au dit autre réseau ou au dit serveur d'applications.

7. Procédé selon l'une quelconque des revendications précédentes, comprenant en outre :
l'enregistrement d'un équipement utilisateur sur la base d'un nœud de réseau d'accès associé au dit réseau de communication IMS.

8. Procédé selon la revendication 7, comprenant :
l'assignation au dit équipement utilisateur d'un nœud de réseau d'accès situé à la périphérie dudit réseau de communication IMS, ledit nœud de réseau d'accès étant un nœud P-CSCF ou un contrôleur de périphérie de session,
l'exécution d'une fonction d'enregistrement associée au dit nœud de réseau d'accès,
le stockage dudit enregistrement dans une base de données d'abonnés comprenant des profils utilisateurs associés à des abonnés à des services dudit réseau de communication IMS,
le stockage d'informations d'emplacements dans une base de données d'emplacements.

9. Procédé selon l'une quelconque des revendications précédentes, comprenant en outre :
l'envoi de ladite demande de service au dit nœud de réseau de desserte assigné,
la demande faite par le nœud de réseau de desserte assigné concernant un profil utilisateur associé au dit équipement utilisateur si une mémoire dudit nœud de réseau de desserte assigné de comprend pas ledit profil utilisateur.

10. Procédé selon la revendication 4, dans lequel ladite demande de service est une demande de service d'arrivée et dans lequel ladite base de données d'emplacements comprend en outre des informations d'emplacements associées à des nœuds de réseau d'accès assignés à un équipement utilisateur enregistré avec le réseau de communication IMS, ledit procédé comprenant en outre :
la demande de ladite base de données d'emplacements concernant les informations d'emplacements associées au dit nœud de réseau d'accès assigné au dit équipement utilisateur d'arrivée si l'équipement utilisateur d'arrivée associé à ladite demande de service d'arrivée est enregistré avec ledit réseau de communication IMS.

11. Procédé selon la revendication 10, comprenant :
l'acheminement de ladite demande de service d'arrivée par l'intermédiaire dudit nœud de réseau d'accès vers ledit équipement utilisateur d'arrivée.

12. Procédé selon l'une quelconque des revendications précédentes, comprenant :
la mise à jour d'un profil utilisateur associé à un abonné pour des services dudit réseau de communication IMS,
la suppression d'un ou plusieurs profils utilisateurs stockés dans une mémoire d'au moins une partie dudit nombre prédéterminé de nœuds de réseau de desserte en réponse à ladite mise à jour de profil utilisateur.

13. Procédé selon la revendication 12, comprenant en outre :
l'envoi d'un message de mise à jour de profil utilisateur à une base de données d'abonnés, représentant une fonction UPSF/HSS, comprenant des profils utilisateurs associés à des abonnés à des services dudit réseau de communication IMS,
la mise à jour dudit profil utilisateur dans ladite base de données d'abonnés,
la demande faite par ladite base de données d'abonnés concernant des informations d'emplacements associées à au moins une partie dudit nombre prédéterminé de nœuds de réseau de desserte,
la transmission d'un message de rafraîchissement de profil utilisateur aux dits nœuds de réseau de desserte,
la suppression de ladite entrée de profil utilisateur de ladite mémoire si ledit profil utilisateur est stocké en mémoire.

14. Procédé selon l'une quelconque des revendications précédentes, dans lequel ladite demande de service est reçue par un contrôleur SBC, un nœud P-CSCF, un contrôleur IBCF, nœud S-CSCF ou un nœud I-CSCF.

15. Procédé selon l'une quelconque des revendications précédentes, dans lequel ladite base de données d'emplacements est située au même endroit que ladite base de données d'abonnés, ou bien dans lequel ladite base de données d'emplacements est située sur un nœud de réseau séparé.

16. Nœud de réseau configuré pour une assignation dynamique d'un nœud de réseau de desserte (112), ledit nœud de réseau de desserte étant configuré pour acheminer une demande de service vers un serveur d'applications comprenant un service associé à la demande de service dans un réseau de communication IMS (106), comprenant un nombre prédéterminé de nœuds de réseau de desserte (112), ledit nœud de réseau comprenant :
un moyen destiné à recevoir la demande de service associée à un équipement utilisateur (102), à un autre réseau (104, 105) ou à un serveur d'applications (120, 122), et dans lequel la demande de service n'est pas une demande pour un enregistrement ou un ré enregistrement,
un moyen destiné à recevoir des informations sur la charge associées à au moins une partie dudit nombre prédéterminé de nœuds de réseau de desserte (112) dans le réseau de communication IMS,
un moyen destiné à assigner l'un dudit nombre prédéterminé de nœuds de réseau de desserte (112) au dit équipement utilisateur (102), au dit autre réseau (104, 105) ou au dit serveur d'applications (120, 122) lorsque ledit moyen de réception reçoit une demande de service, ladite assignation étant fondée sur lesdites informations sur la charge.

17. Nœud de réseau selon la revendication 16, comprenant en outre :
un moyen destiné à envoyer des informations d'assignation identifiant un équipement utilisateur, un autre réseau ou un serveur d'applications assigné à l'un dudit nombre prédéterminé de nœuds de réseau de desserte.

18. Nœud de réseau selon les revendications 16 ou 17, comprenant en outre :
un moyen destiné à recevoir un message de rafraîchissement de profil utilisateur,
un moyen destiné à supprimer une entrée de profil utilisateur d'une mémoire dudit nœud de réseau si ladite mémoire comprend le profil utilisateur identifié dans ledit message de rafraîchissement de profil utilisateur.

19. Système de communication, configuré pour une assignation dynamique d'un nœud de réseau de desserte (112) à au moins un équipement utilisateur (102), un autre réseau (104, 105) ou un serveur d'applications (120, 122) à la réception d'une demande de service ne représentant pas une demande pour un enregistrement ou un ré enregistrement, ledit réseau de communication IMS (106) comprenant un nombre prédéterminé de nœuds de réseau de desserte (112), et
au moins un nœud de réseau conforme à l'une quelconque des revendications 16 à 18,
un serveur de base de données d'abonnés (118) comprenant des profils utilisateurs associés à des abonnés au dit réseau de communication IMS (106), ledit serveur de base de données d'abonnés (118) comprenant en outre :
un moyen destiné à mettre à jour un profil utilisateur stocké dans une mémoire dudit serveur (118),
un moyen destiné à recevoir des informations d'emplacements associées à tous les nœuds disponibles (112) de réseau de desserte,
un moyen destiné à transmettre un message de rafraîchissement de profil utilisateur à ladite totalité des nœuds disponibles (112) de réseau de desserte de sorte à ce que si le profil utilisateur est stocké dans une mémoire d'un ou plusieurs desdits nœuds de réseau de desserte (112), ledit nœud de réseau de desserte (112) supprimera ladite entrée de profil utilisateur de ladite mémoire,
ainsi qu'un serveur d'emplacements (310) comprenant une base de données d'emplacements comportant des informations d'emplacements associées au dit nombre prédéterminé de nœuds de réseau de desserte (112) ; des informations d'assignation identifiant un équipement utilisateur (102), un autre réseau (104, 105) ou un serveur d'applications (120, 122) assigné à au moins l'un dudit nombre prédéterminé de nœuds de réseau de desserte (112) ; tout comme des informations d'emplacements associées à des nœuds de réseau d'accès assignés à un équipement utilisateur (102) enregistrés avec le réseau de communication IMS (106), ledit serveur d'emplacements (310) comprenant en outre :
un moyen destiné à recevoir et à transmettre des informations d'assignation identifiant un équipement utilisateur (102), un autre réseau (104, 105) ou ledit serveur d'applications (120, 122) assigné à au moins l'un dudit nombre prédéterminé de nœuds de réseau de desserte (112),
un moyen destiné à recevoir et à transmettre des informations d'emplacements associées au dit nombre prédéterminé de nœuds de réseau de desserte (112) et/ou aux dits nœuds de réseau d'accès assignés à l'équipement utilisateur (102) enregistrés avec le réseau de communication IMS (106).

20. Produit de programme informatique, le produit de programme informatique comprenant des parties de code logiciel configurées, lorsqu'elles sont exécutées par un ordinateur, pour exécuter le procédé conforme à l'une quelconque des revendications 1 à 15.
